**Europäisches Patentamt**

**European Patent Office**

**Office européen des brevets**

(19)

(11) Numéro de publication: **0 108 674**
**B1**

(12) **FASCICULE DE BREVET EUROPEEN**

(45) Date de publication du fascicule du brevet: **03.06.87**

(51) Int. Cl.⁴: **G 06 F 15/20**

(21) Numéro de dépôt: **83402066.1**

(22) Date de dépôt: **24.10.83**

(54) **Terminal graphique à mémoire de points muni d'un système d'écriture en mémoire d'image de signaux de texture d'image.**

(30) Priorité: **04.11.82 FR 8218492**

(43) Date de publication de la demande:
**16.05.84·Bulletin 84/20**

(45) Mention de la délivrance du brevet:
**03.06.87 Bulletin 87/23**

(84) Etats contractants désignés:
**BE CH DE GB IT LI NL SE**

(56) Documents cités:
**FR-A-2 466 061**
**US-A-3 999 308**
**US-A-4 225 861**

(73) Titulaire: **Vigarie, Jean-Pierre**
**32, rue des Tilleuls**
**F-35510 Cesson (FR)**
(73) Titulaire: **Etablissement Public de Diffusion dit "Télédiffusion de France"**
**21-27 rue Barbès**
**F-92120 Montrouge (FR)**

(72) Inventeur: **Vigarie, Jean-Pierre**
**32, rue des Tilleuls**
**35510 Cesson (FR)**

(74) Mandataire: **Mongrédien, André et al**
**c/o BREVATOME 25, rue de Ponthieu**
**F-75008 Paris (FR)**

Courier Press, Leamington Spa, England.

**Description**

La présente invention a pour objet un terminal graphique à mémoire de points muni d'un système d'écriture en mémoire d'image de signaux de texture d'image.

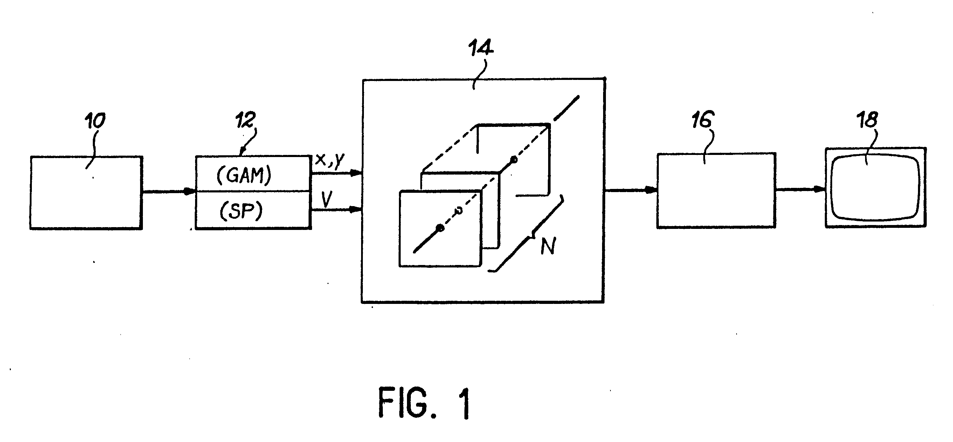

Un terminal graphique à mémoire de points est représenté de manière très générale sur la figure 1. Il comprend un microordinateur de gestion 10, un circuit de commande 12, une mémoire d'image 14, un générateur de signaux vidéo 16 relié à la mémoire et enfin un récepteur vidéo d'affichage 18. Le cirduit 12 est composé schématiquement d'un générateur d'adresses mémoire (désigné par l'abréviation GAM) et d'un sélectionneur de plans (désigné par SP). La mémoire 14 est constituée de N plans mémoire.

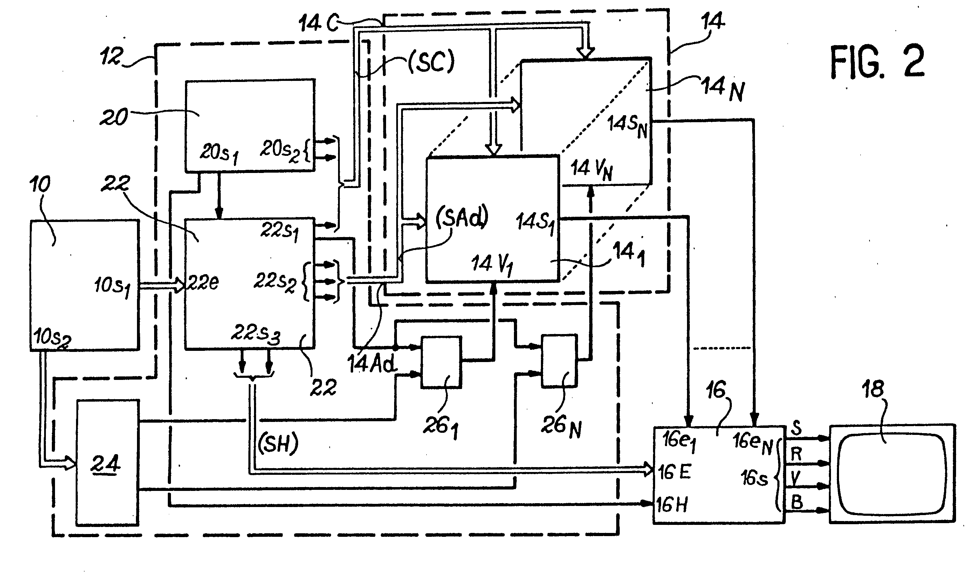

La figure 2 précise la structure de ces éléments et les diverses connexions qui les relient entre eux. On y voit notamment, de manière plus détaillée, la mémoire d'image 14 avec ses N plans mémoire $14_1...14_N$ (N étant un entier au moins égal à 1), chaque plan comprenant un ensemble matriciel de points apte à mémoriser chacun un élément binaire ou bit. Chaque point est défini par une adresse. Les N bits des N points ayant même adresse dans les différents plans définissent un mot de N bits qui sera noté par la suite V. La mémoire 14 possède une entrée d'adressage 14Ad commune aux N plans et une entrée de commande 14C également commune à tous les plans; elle possède en outre N entrées de validation $14V_1...14V_N$ et N sorties binaires $14S_4...14S_N$.

Le circuit de commande 12 comprend un séquenceur 20 et un processeur d'effichage graphique 22. Le séquenceur possède une sortie d'horloge $20s_1$ et des sorties de commande $20s_2$. Le processeur d'affichage graphique possède une entrée 22e, un premier groupe de sortie $22s_1$ associé aux sorties $20s_2$ du séquenceur, ces sorties délivrant des signaux de commande notés SC définissant un cycle d'accès à la mémoire, un second groupe de sorties $22s_2$, délivrant des signaux d'adresse notés SAd, un troisième groupe de sorties $22s_3$ délivrant des signaux d'horloge SH et de synchronisation destinés au générateur 16. Les signaux de commande SC sont appliquées, par un premier bus, à l'entrée de commande 14C de la mémoire 14 et les signaux d'adresse SAd, par un second bus, à l'entrée d'adressage 14Ad.

Le circuit de commande 12 comprend encore un circuit 24 qui est relié à N portes $26_1...26_N$ dont les sorties sont reliées aux entrées de validation $14V_1...14V_N$ de la mémoire. Le circuit 24 commande l'ouverture des portes $26_1...26_N$ pour valider les plans mémoire selon le signal délivré par la sortie $22s_1$ du circuit 22.

L'ensemble de ces moyens du circuit 12 remplit la fonction de génération d'adresse mémoire (GAM) et de sélection de plans (SP).

Le générateur de signaux vidéo 16 possède N entrées binaires $16e_1...16e_N$ reliées aux N sorties binaires de la mémoire d'image 14, une entrée de synchronisation 16E reliée au troisième groupe de sorties $22e_3$ du processeur d'affichage graphique 22 et une entrée d'horloge 16H reliée à la sortie d'horloge $20s_1$ du séquenceur 20. Le générateur 16 possède également une sortie 16s délivrant des signaux vidéo (R, V, B) et de synchronisation (S).

Un terminal graphique de ce genre à pour fonction d'engendrer des images à partir d'informations qu'il reçoit ou qu'il traite. Ces images sont construites et mémorisées point par point dans la mémoire 14 qui est pour cette raison dénommée "mémoire d'image". La gestion d'un tel terminal graphique est assurée par le microordinateur 10 qui dialogue avec l'extérieur (en pratique avec un calculateur hôte, un autre terminal, un clavier, une tablette graphique, etc...) et transforme des demandes de création d'images en signaux appropriés, lesquels sont délivrés sur sa sortie $10s_1$ et adressés au circuit de commande 12. Ce dernier est conçu pour que soient écrites en mémoire d'image les valeurs correspondant à chacun des points constituant le graphisme à afficher. Ces valeurs traduisent l'aspect de chacun des points tels qu'ils doivent apparaître sur l'écran: il peut s'agir de la luminance, de couleurs primaires ou de toute autre grandeur permettant de restituer l'une ou l'autre de ces caractéristiques.

Ecrire un graphisme en mémoire d'image demande l'exécution simultanément de deux opérations: une définition du squelette du graphisme, ce qui est obtenu par la définition d'un ensemble de points et une évaluation, pour chacun des points du squelette, de la valeur V qui va le représenter en mémoire d'image. La première opération est réalisée par le générateur d'adresses mémoire GAM, qui engendre des adresses, autrement dit des coordonnées de points, la seconde par le sélectionneur de plan SP. La valeur V inscrite est l'une de $2^N$ valeurs possibles et elle se traduit par un mot de N bits formé d'éléments binaires égaux à 0 ou à 1. Chaque "1" ayant un rang déterminé dans le mot est mémorisé dans le plan mémoire de même rang à l'adresse définie par le générateur d'adresse. Ainsi, lorsque le circuit 12 compose un graphisme il détermine simultanément les coordonnées x, y des points composant ce graphisme et les plans de la mémoire qu'il faut valider.

Le générateur vidéo 16 a pour rôle de convertir le signal lu dans la mémoire d'image en un signal apte à commander un organe d'affichage tel qu'un récepteur vidéo. Typiquement, ce signal est du type de ceux qu'on rencontre en télévision. On notera que le générateur vidéo 16 a en lecture, accès en permanence à la mémoire d'image.

L'ensemble du circuit 12, de la mémoire d'image 14 et du générateur 16 constitue ce qu'on appelle un automate de visualisation. Dans une première génération, la conception de tels automates était essentiellement basée sur du logiciel qui servait à définir les opérations nécessaires à l'affichage de caractères, de points, de vecteurs, d'arcs de cercle, de taches, etc... L'inconvénient de ces appareils est qu'ils conduisaient à une durée d'exécution relativement longue. Pour cette raison, certaines fonctions liées notamment à la mémoire d'image et au générateur vidéo, ont fait l'objet de quelques améliorations de caractère matériel afin que soit accéléré le traitement du générateur de tracé.

Une deuxième génération d'automates de visualisation est apparue avec la mise au point de circuits intégrés spécialisés dans la gestion des mémoires d'image définies par points (par exemple les circuits EFCIS 9365 ou NEC 7220). Ces circuits regroupent, en général, les fonctions de gestion globale de la mémoire, pour le compte du générateur de tracé en écriture et pour celui du générateur vidéo en lecture, de gestion de la mémoire elle-même (rafraîchissement de mémoire dynamique); ils assurent également les fonctions de structuration du signal vidéo (synchronisation, période d'effacement) et quelques fonctions de tracé (de caractères, de segments, d'arcs de cercle, etc...). Cependant, de tels circuits ne fonctionnent qu'avec un seul plan mémoire. Ils se caractérisent surtour par une grande rapidité d'exécution des tracés, mais par un contrôle moins fin des graphismes obtenus.

Parmi les terminaux de la première génération, on peut citer le terminal spécialement conçu pour la téléécriture ou la vidéographique alphagéométrique, qui fait l'objet de la demande de brevet français publié n° 2 465 281 intitulée "Dispositif de transmission numérique et d'affichage de graphisme et/ou de caractère sur un écran". Dans un tel terminal, les accès en écriture de la mémoire d'image sont sous le contrôle du logiciel, qui détermine intégralement chaque point à écrire et sa valeur. Les fonctions GAM et SP mentionnées plus haut sont alors obtenues par des programmes d'instructions. On peut mettre en oeuvre, avec un tel terminal, un processus dit de remplissage de zone, afin de couvrir une partie de l'image par des hachures ou de lui donner une teinte particulière.

Les diverses fonctions remplies par ces équipements présentent une grande souplesse en ce qui concerne la formation d'images, mais comme elles nécessitent un temps de traitement important, ces fonctions sont, en pratique, limitées à des traitements simples: remplissage de couleur uniforme, hachurage élémentaire...

Dans les terminaux de la seconde génération, la part de logiciel est plus faible et celle du matériel plug grande. Les circuits intégrés utilisés sont aptes à effectuer une gestion de haut niveau de la mémoire d'image. Par exemple, le processeur de visualisation graphique EF 9365 développé par EFCIS effectue directement la génération en mémoire d'image de caractères ou de vecteurs avec une vitesse élevée. Dans ce cas, cependant, on ne maîtrise plus aussi finement l'aspect des points affichés, car ce type de circuits ne connaît pas la notion de plans mémoire.

Ainsi, les terminaux connus ne réussissent pas à concilier la vitesse d'obtention d'une image et la finesse de celle-ci. Les solutions mettant en oeuvre des circuits spécialisés dans la gestion de mémoires d'image favorisent le premier paramètre mais pénalisent le second. Inversement, la finesse de l'image peut s'obtenir par logiciel, mais alors de temps de traitement devient trop long.

Le but de la présente invention est justement de concilier la souplesse des solutions basées sur du logiciel et la rapidité des matériels spécialisés tout en recherchant une relative simplicité de mise en oeuvre.

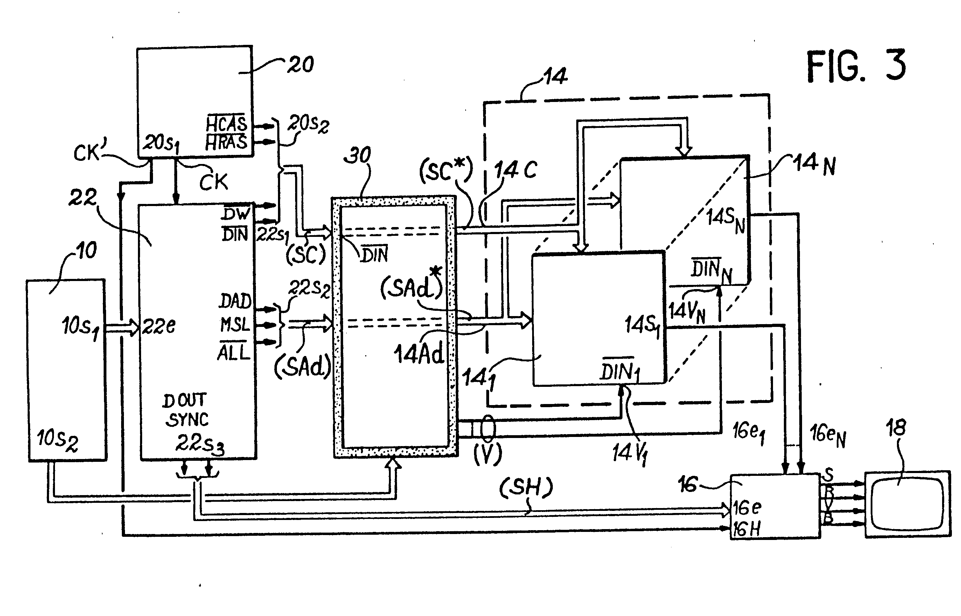

A cette fin, l'invention telle qu'elle fait l'objet de la revendication 1 prevoit l'insertion, dans un terminal du genre de celui qui vient d'être décrit, d'un système d'écriture en mémoire d'image de signaux de texture d'image, qui, comme le montre la figure 3, où il porte la référence 30, s'insère entre, d'une part, le groupe séquenceur 20 et le processeur d'affichage graphique 22 et, d'autre part, la mémoire 14. Un tel système est conçu pour qu'il soit possible d'écrire dans la mémoire d'image à une vitesse qui est compatible avec l'usage des circuits spécialisés.

Outre l'écriture d'une valeur constante, utilisée dans le cas de graphismes simples à base de traits ou de caractères, le système de l'invention permet la modification de cette valeur à l'intérieur de certaines zones de l'image, afin que soient obtenues des textures particulières. Ainsi, un terminal équipé du système de l'invention possède deux modes de fonctionnement: un mode "normal", qui est celui où la valeur V affectée à différents points est constante, programmable et indépendante de la position des points, et un mode "motif", qui est celui où la valeur V affectée à un point est fonction de la position du point dans le motif que l'on veut obtenir. Le premier mode est utilisé dans le cas de tracés de vecteurs, d'affichage de caractères ou de zones à fond uniforme et le second dans le cas de tracés de zones à fond non uniforme (par exemple dans le cas de hachures).

Le système de l'invention s'appuie sur des textures qui sont obtenues par répétition d'un même motif. Aussi, la vitesse d'accès à la mémoire d'image est indépendante du motif utilisé, de la texture souhaitée ou du nombre de plans de la mémoire d'image.

Le système de l'invention nécessite un fonctionnement de la mémoire d'image et du générateur d'adresses mémoire tel qu'on accède simultanément à tous les bits de même adresse dans les N plans, par un cycle d'écriture mémoire. Ainsi, se trouve maîtrisé le rendu visuel de chaque point de la mémoire d'image, le circuit spécialisé servant de générateur d'adresse mémoire étant utilisé à son débit maximal. Cet accès ponctuel permet, en ne faisant traiter au système de l'invention que les points intérieurs à une zone, de résoudre automatiquement le problème du découpage de la texture le long du contour de cette zone.

Les résultats pouvant être obtenus selon l'invention, sont particulièrement caractéristiques dans le cas où il faut remplir des portions d'image par différentes textures. Si le terminal utilise une mémoire à un seul plan, apte à mémoriser une image à deux niveaux de luminance, on peut simuler, grâce à l'invention, plusieurs niveaux de luminance par l'utilisation de différents motifs à densité de points variable. Dans le cas d'un terminal utilisant une mémoire à trois plane et de moyens d'affichage en couleurs, cette technique peut être généralisée afin d'élargir artificiellement la palette des teintes. Enfin, en jouant sur les différents paramètres définissant la répétition du motif, on peut engendrer des hachures dans diverses directions, avec différentes largeurs et éventuellement de couleurs différentes. Enfin, il est possible de faire apparaître un fond uniforme sur lequel se répète un graphisme particulier.

Avant de décrire les moyens essentiels de l'invention, et des modes particuliers de réalisation de ceux-ci, quelques considérations sur la manière de définir une texture d'image vont être développées.

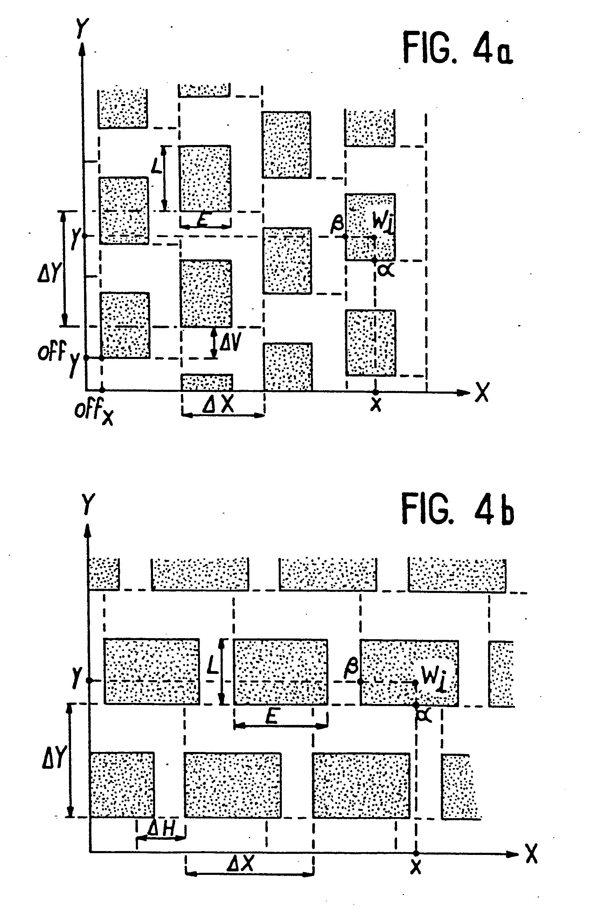

Dans ce qui suit, on appelle "motif" une matrice de points de la mémoire d'image, de L lignes et de E colonnes. Ce motif est inscrit dans une maille qui est un rectangle de côtés $\Delta X$ et $\Delta Y$. Une telle maille peut être répétée selon le principe illustré sur les figures 4a et 4b. Dans la direction horizontale, la maille se répète avec la période $\Delta X$ et se décale verticalement de $\Delta V$ (figure 4a). Dans la direction verticale, la maille se répète avec la période $\Delta Y$, en se décalant horizontalement de $\Delta H$ (figure 4b). On supposers par la suite que le décalage vertical et le décalage horizontal sont mutuellement exclusifs, c'est-à-dire que si $\Delta H$ n'est pas nul, alors $\Delta V$ l'est (figure 4b) et vice-versa (figure 4b). Enfin, il faut définir une origine du maillage, qui est le point correspondant au coin inférieur gauche du motif élémentaire de départ. Ses coordonnées seront notées $off_x$ et $off_y$.

Un maillage est composé ainsi de deux parties: la partie motif qui contient différents points répartis dans les rectangles en pointillé sur les figures 4a et 4b, et la partie fond de maille qui comprend les zones complémentaires. Les points formant le fond de maille peuvent correspondre à une valeur constante choisie, ce qui engendre alors un fond uniforme, ou correspondre à la valeur qui caractérisait l'aspect de l'écran avant l'introduction du motif, le fond de maille étant alors transparent.

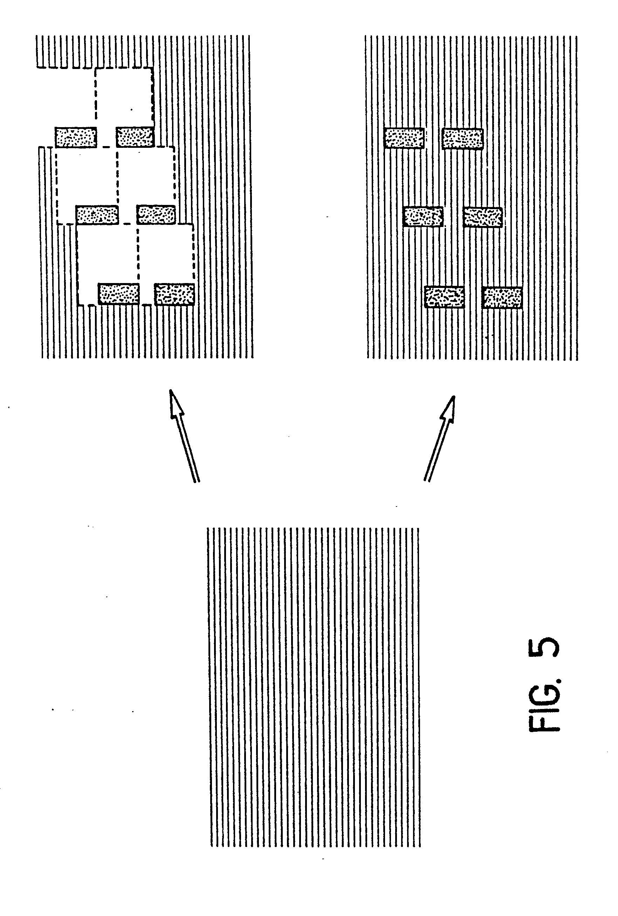

C'est ce qui est représenté sur la figure 5, où la partie gauche montre un aspect de l'écran correspondant à une image avant incorporation d'une texture d'imagé et, sur la partie droite l'aspect de cet écran pour un maillage à fond uniforme (en haut) et à fond transparent (en bas).

Une texture d'image correspondant à une telle répétition de motif, est écrite en mémoire d'image selon le processus suivant. Pour définir le mot à écrire à une adresse (x, y), il faut d'abord calculer les coordonnées $(\alpha, \beta)$ du point par rapport à la maille dans laquelle il se trouve. C'est ce qui est représenté sur les figures 4a, 4b où un point $W_i$ a les coordonnées x, y, si on considère le plan mémoire et les coordonnées $\alpha, \beta$, si l'on se réfère à la maille à laquelle il appartient.

A cette fin, on calcule d'abord deux coordonnées $\alpha^*$ et $\beta^*$ définies par les relations:

$$\alpha^* = (x + off_x) - \frac{(y + off_y)}{\Delta Y} \cdot \Delta H \qquad (1)$$

$$\beta^* = (y + off_y) - \frac{(x + off_x)}{\Delta X} \cdot \Delta V \qquad (1')$$

On rappelle que si $\Delta H \neq 0$, $\Delta V$ doit être nul et inversement. Ces grandeurs étant obtenues, on détermine si $\alpha^*$ est positif ou nul; dans l'affirmative, la coordonnée $\alpha$ recherchée est prise égale à:

$$\alpha^* \text{ modulo } \Delta X \qquad (2)$$

Dans la négative, on prend:

$$\alpha = [\Delta X - (|\alpha^*| \text{ modulo } \Delta X)] \text{modulo } \Delta X \qquad (3)$$

où $|\alpha^*|$ désigne la valeur absolue de $\alpha^*$.

De même, on détermine si $\beta^*$ est positif ou nul. Dans l'affirmative, on prend:

$$\beta = \beta^* \text{ modulo } \Delta Y \qquad (2')$$

et dans la négative, on prend:

$$\beta = [\Delta Y - (|\beta^*| \text{ modulo } \Delta Y)] \text{modulo } \Delta Y \qquad (3')$$

Connaissent $\alpha$ et $\beta$, il reste à déterminer si le point est dans la partie motif ou dans la partie fond de motif. Cela revient à examiner si $\alpha$ est inférieur à E et si, simultanément, $\beta$ est inférieur à L. Si cette condition est satisfaite (condition que l'on désignera par la suite par la notation "DANS") le point mémoire de coordonnées (x, y) correspond à un point situé dans le motif. Il lui correspond dans la mémoire d'image un mot défini par le motif. Si cette condition n'est pas satisfaite, le point mémoire (x, y) correspond à un point situé hors du motif et le mot qui lui correspond restera inchangé en cas de fond de maille transparent ou prendra une valeur arbitraire en cas de fond de maille uniforme.

Les figures 6, 7 et 8 illustrent quelques textures pouvant être obtenues avec différentes combinaisons

**0 108 674**

de valeurs ΔX, ΔY, ΔH et ΔV. Pour chaque combinaison, la forme et le mode de répétition de la maille sont schématisés par quatre rectangles blancs (en pratique évidemment, la répétition du motif élémentaire s'étend sur plus de quatre mailles). La forme d'une maille est définie par ΔX et ΔY (cf. figures 4a, 4b) et le décalage d'une maille au cours de sa répétition est défini par ΔH et ΔV. Pour la première texture, par exemple, qui est illustrée sur la figure 6, on a ΔX=8, ΔY=8, ΔH=0, ΔV=0. Cela signifie que la maille élémentaire est un carré (ΔX=ΔY) et que cette maille est reproduite sans décalage horizontal ni vertical (ΔH=ΔV=0). D'où les quatre carrés blancs. Pour la figure 7, on a ΔX=32, ΔY=8, ΔH=8 et ΔV=0. La maille élémentaire est alors un rectangle allongé horizontalement qui est reproduit avec décalage horizontal mais sans décalage vertical. Enfin, pour la figure 8, on a ΔX=8, ΔY=8, ΔH=0, ΔV=2. La maille élémentaire est à nouveau un carré, mais qui est reproduit avec décalage vertical.

Pour chacune de ces trois combinaisons, trois motifs différents sont illustrés, qui sont définis par trois couples de valeurs E et L. L'aspect du motif est représenté en haut de chaque texture par un carré simulant la maille, dont une partie, simulant le motif, est en pointillé. Pour les trois figures, on trouve à gauche, un motif tel que E=ΔX et

$$L=\frac{\Delta Y}{2}$$

ce qui est symbolisé par un carré dont la moitié inférieure est en pointillé, au milieu un motif tel que

$$E=\frac{\Delta X}{2}$$

et L=ΔY, symbolisé par un carré dont la moitié gauche est en pointillé et enfin, à droite, un motif où l'on a

$$E=\frac{\Delta X}{2}$$

et

$$L=\frac{\Delta Y}{2}$$

ce qui est symbolisé par un petit carré pointillé situé dans le coin inférieur gauche.

Si l'on répète ces trois types de maille élémentaire selon les trois types de maillage indiqués, on obtient les neuf textures représentées.

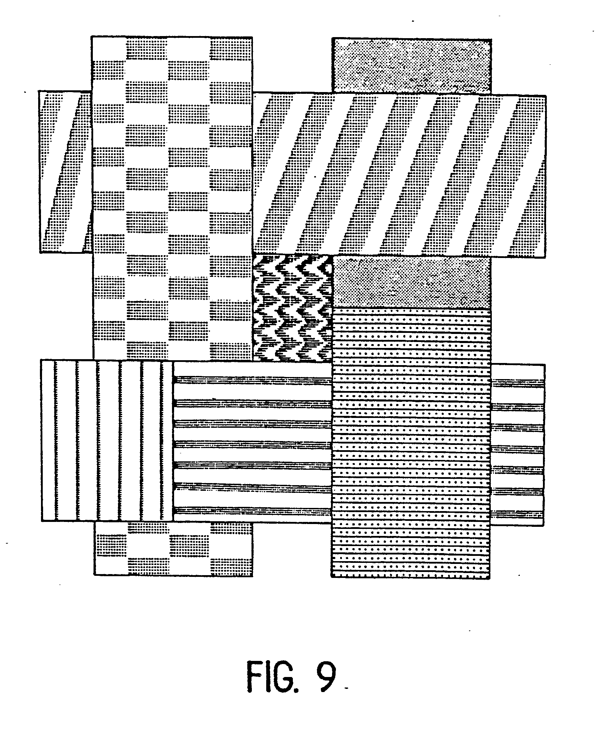

La figure 9 montre, à titre d'exemple, une combinaison de textures pouvant être obtenue par le système de l'invention. Naturellement, tous ces exemples ne présentent aucun caractère limitatif, mais sont seulement destinés à illustrer le principe de la génération d'une texture qui est à la base de l'invention.

Ces considérations étant exposées, et revenant à la figure 3, montrant la structure générale du terminal de l'invention, le système 30 qui caractérise l'invention, doit contenir essentiellement deux types de circuits:

A)— tout d'abord, un circuit de traitement du cycle d'accès à la mémoire, dont la rôle est de transmettre à la mémoire des signaux de contrôle et des signaux d'adressage appropriés,

B)— ensuite, un circuit de détermination du mot à écrire dans la mémoire d'image pour chaque point de l'image à afficher, mot qui dépend du motif choisi et de la place du point considéré dans ce motif.

De façon plus précise, selon l'invention le circuit (A) de traitement du cycle d'accès à la mémoire d'image contient:

$A_1$)— un premier circuit de transmission avec retard des siganux de commande et d'adressage provenant des circuits 20 et 22,

$A_2$)— un second circuit de mise en forme qui, à partir de l'adresse d'un point, est capable de restituer les coordonnées x, y de ce point.

Le circuit B) de détermination du mot à écrire en mémoire contient quatre circuits:

$B_1$)— un circuit de paramétrage de fonctionnement, dont le rôle est de fournir les grandeurs ΔX, ΔY, ΔH, ΔV, $off_x$, $off_y$, E, L définissant une texture particulière et certains signaux définissant un mode de fonctionnement,

5

**0 108 674**

B$_2$)— un circuit de calcul des coordonnées α et β correspondant au point de coordonnées x et y et de détermination de la place de ce point par rapport au motif élémentaire,

B$_3$)— un circuit mémoire de motifs, constitué de mémoires contenant les informations nécessaires à la définition de différents types de motifs,

B$_4$)— un circuit de sélection de configuration dont le rôle est de valider le cycle de commande de la mémoire et de délivrer finalement le mot à écrire en mémoire d'image.

De préférence, on mémorise les informations relatives à trois types de motifs, qui correspondant à trois besoins différents. Ces trois types sont les suivants, dans un ordre de complexité croissante:

— le premier concerne un motif constitué d'un fond uniforme: c'est typiquement le cas du hachurage simple; un tel motif est complètement décrit par une valeur V$_p$ relative à l'aspect que présentent tous les points du motif et par ses dimensions (E et L); il sera désigné par la suite par "motif-point";

— le deuxième type de motif utilisé est tel que, partant d'un même squelette, le motif peut prendre l'un ou l'autre de plusieurs aspects prédéterminés; par exemple, pour un motif à trois teintes, un premier motif peut utiliser le vert, le rouge et le blanc et un deuxième motif, le noir, le bleu et le cyan; ce type de motif est donc décrit par un squelette dont les éléments peuvent prendre chacun une valeur parmi plusieurs, cette valeur étant définie par une table de correspondance, donnant, pour un indice k donné, la valeur V(k) correspondante; un tel motif sera désigné par la suite par "motif-squelette";

— le troisième type de motif utilisé, qui est le plus complexe utilise des points dont toutes les valeurs sont définies; chaque point de ce motif est décrit par une valeur particulière appliquée directement à la mémoire d'image; ce motif sera désigné par la suite par "motif-vrai".

Pour stocker une telle collection de types de motifs, le circuit mémoire de motifs comprend une première mémoire affectée à des motifs-point, une seconde mémoire affectée à des motifs-squelette et une troisième mémoire affectée à des motifs-vrai; à ces mémoires s'ajoutent un circuit logique de sélection de motif et un multiplexeur délivrant le mot correspondant au motif sélectionné dans le type choisi.

De préférence encore, on choisit comme paramètres de maille ΔX, ΔY, ΔH et ΔV des nombres qui sont des puissances de 2. Dans ce cas en effet, les opérations division et produit intervenant dans les relations (1) et (1') données plus haut, se ramènent à des décalages d'éléments binaires, et les fonctions "modulo" des relations (2), (3), (2'), et (3') sont simples à effectuer. En outre, en retenant pour les nombres négatifs la représentation binaire en complément à 2, les relations (2) et (3) ou (2') et (3') peuvent être réalisées par les mêmes circuits que pour les nombres positifs.

De façon plus précise, cette hypothèse de grandeurs égales à des puissances de 2 permet de simplifier les relations (1) et (1') de la manière suivante. Ces relations font apparaître les fonctions:

$$\frac{(y+\text{off}_y)}{\Delta Y} \cdot \Delta H \quad \text{et} \quad \frac{(x+\text{off}_x)}{\Delta X} \cdot \Delta V$$

que l'on peut écrire sous la forme générale:

$$f = \frac{z}{\Delta 1} \cdot \Delta 2$$

où Δ1 et Δ2 représentent alternativement ΔY, ΔX et ΔH, ΔV, Si Δ2=0 la fonction f est la fonction nulle; si Δ2≠0, Δ1 et Δ2, qui sont des puissances de 2, peuvent s'écrire sous la forme:

$$\Delta 1 = 2^{d_1} \quad \text{et} \quad \Delta 2 = 2^{d_2} \quad \text{avec par exemple } d_1 > d_2$$

Dans ce cas, on obtient f en décalant z de $(d_1 - d_2)$ bits vers les poids faibles et en mettant à 0 les $d_2$ bits de poids faible du résultat; ces opérations sont simples à réaliser.

Pour ce qui est maintenant des relations (2), (3) et (2'), (3'), elles font intervenir des expressions de la forme t modulo Δ1. Si l'on prend $\Delta 1 = 2^{d_1}$, cela revient à ne conserver que les $d_1$ bits de poids faible de t, si t est positif. Ce principe, très simple, est mis en oeuvre pour traiter les relations (2) et (2'). Il peut l'être également lorsque α* (ou β*) est négatif, ce qui correspond aux relations (3) ou (3'). Ainsi, n'est-il pas nécessaire, dans ce cas particulier, d'analyser préalablement le signe de α* (ou de β*) pour obtenir α (ou β).

De toute façon, les caractéristiques et avantages de l'invention apparaîtront mieux après la description qui suit, d'exemples de réalisation donnés à titre explicatif et nullement limitatif. Cette description se réfère à des dessins annexés sur lesquels:

— la figure 1, déjà décrite, est un schéma général d'un terminal graphique selon l'art antérieur,

— la figure 2, déjà décrite, est un schéma plus détaillé d'un tel terminal,

6

**0 108 674**

— la figure 3, déjà décrite, montre un terminal conforme à l'invention avec un système d'écriture en mémoire d'image de signaux de texture d'image,

— les figures 4a et 4b, déjà décrites, illustrent la formation d'une texture par répétition d'un même motif,

— la figure 5, déjà décrite, illustre un maillage à fond uniforme et un maillage à fond transparent,

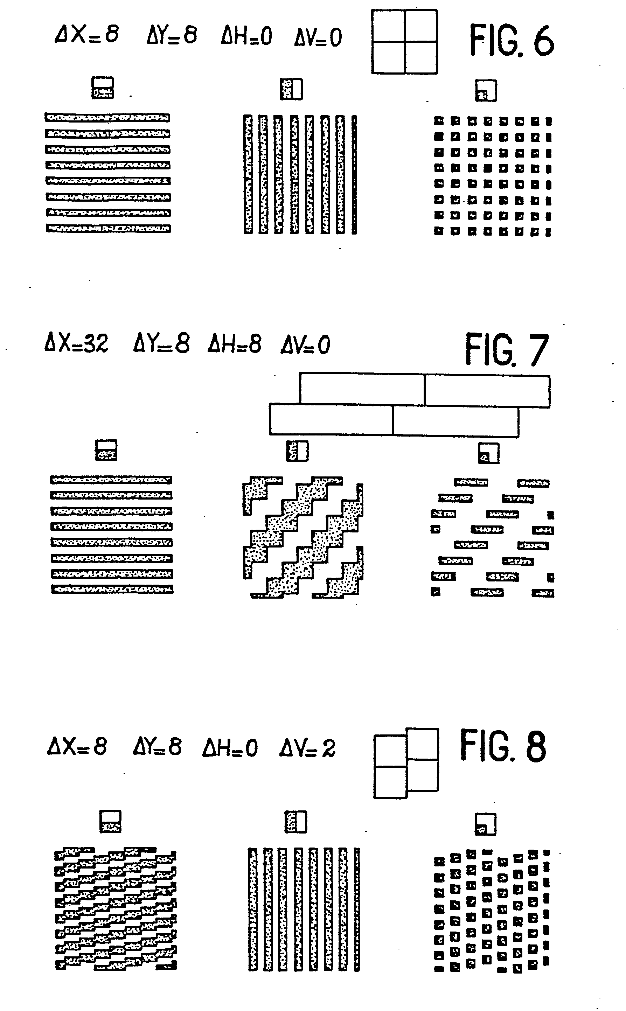

— les figures 6, 7, 8, déjà décrites, illustrent des exemples de textures,

— la figure 9, déjà décrite, montre un exemple d'assemblage de textures d'images que l'invention permet de produire,

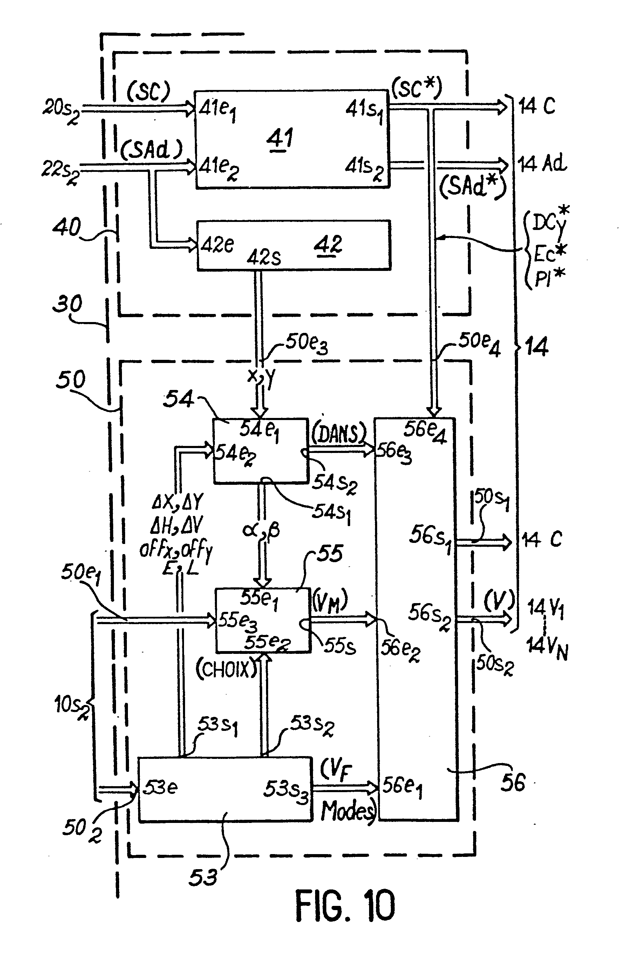

— la figure 10 représente le schéma du système d'écriture en mémoire d'image de texture d'image selon l'invention,

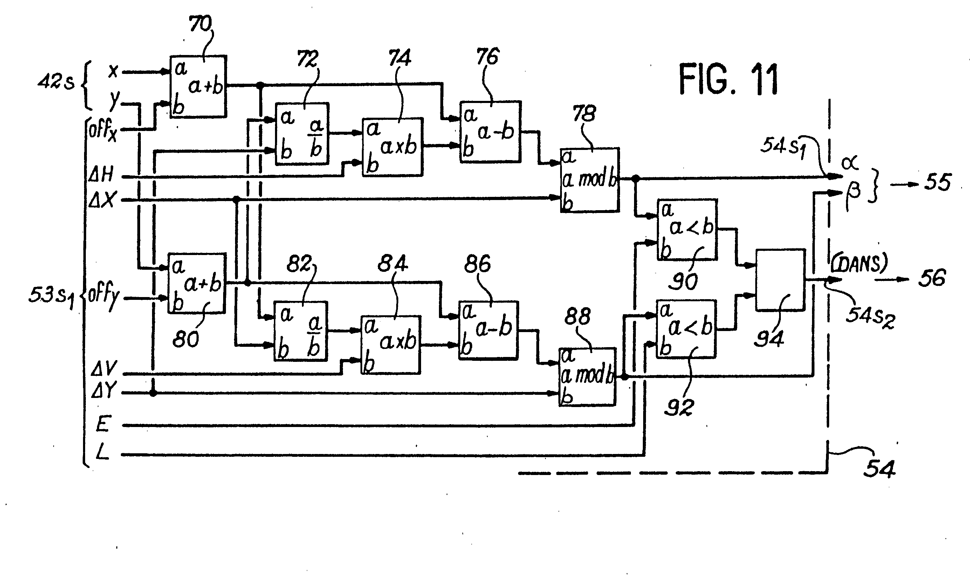

— la figure 11 représente le schéma du circuit de calcul des coordonnées α et β,

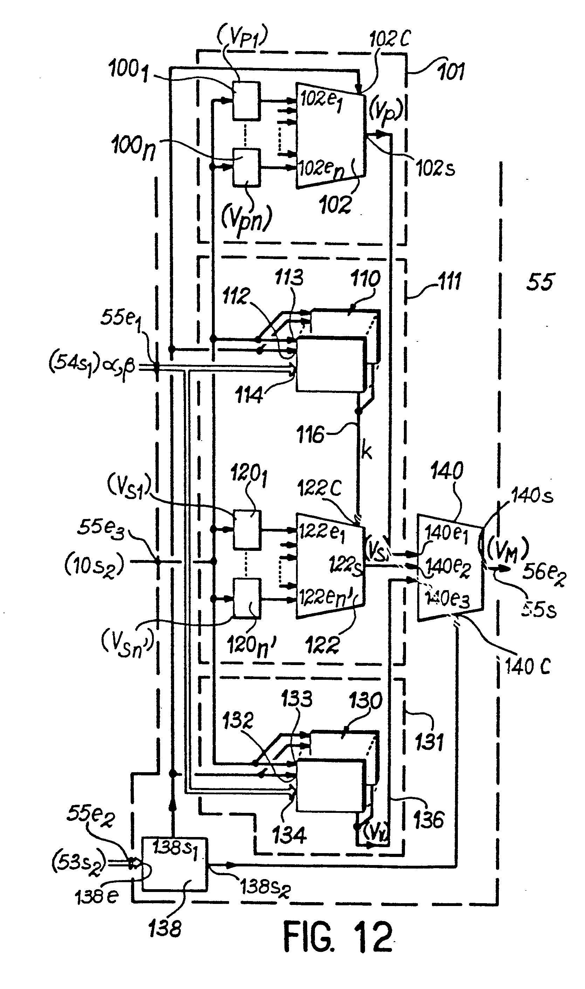

— la figure 12 représente le schéma du circuit mémoire de motifs,

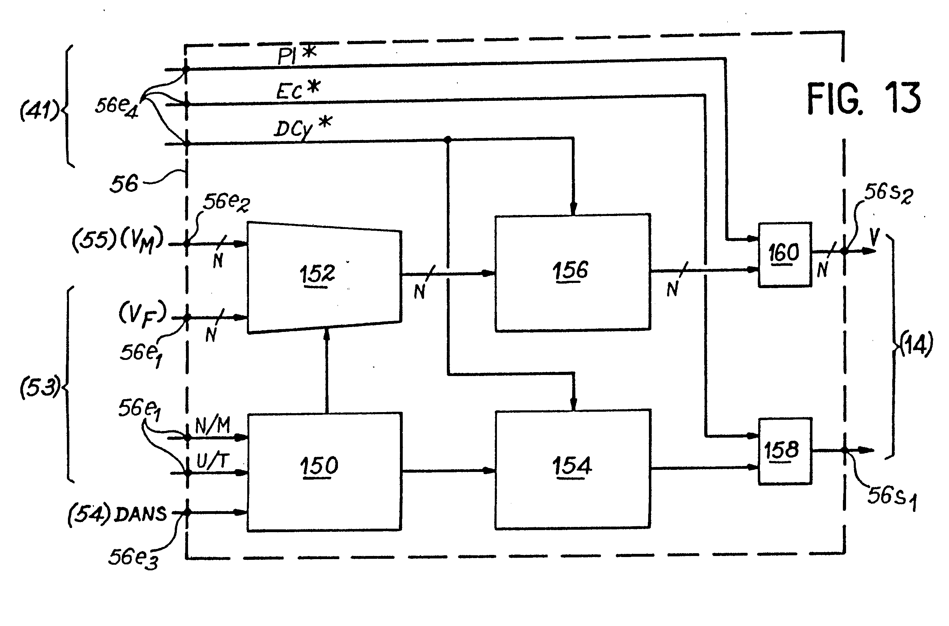

— la figure 13 représente le schéma du circuit de sélection de configuration,

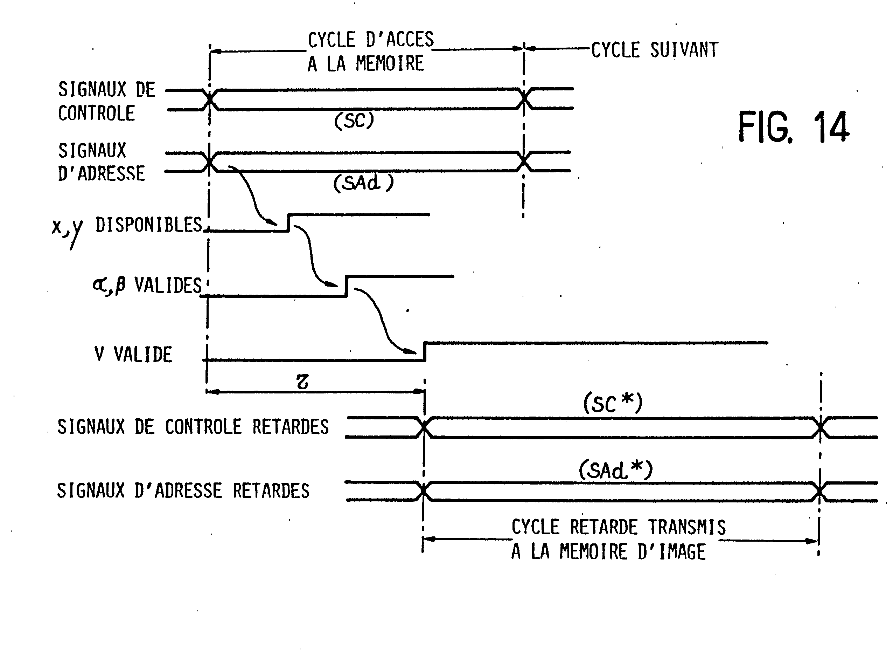

— la figure 14 est un chronogramme fonctionnel,

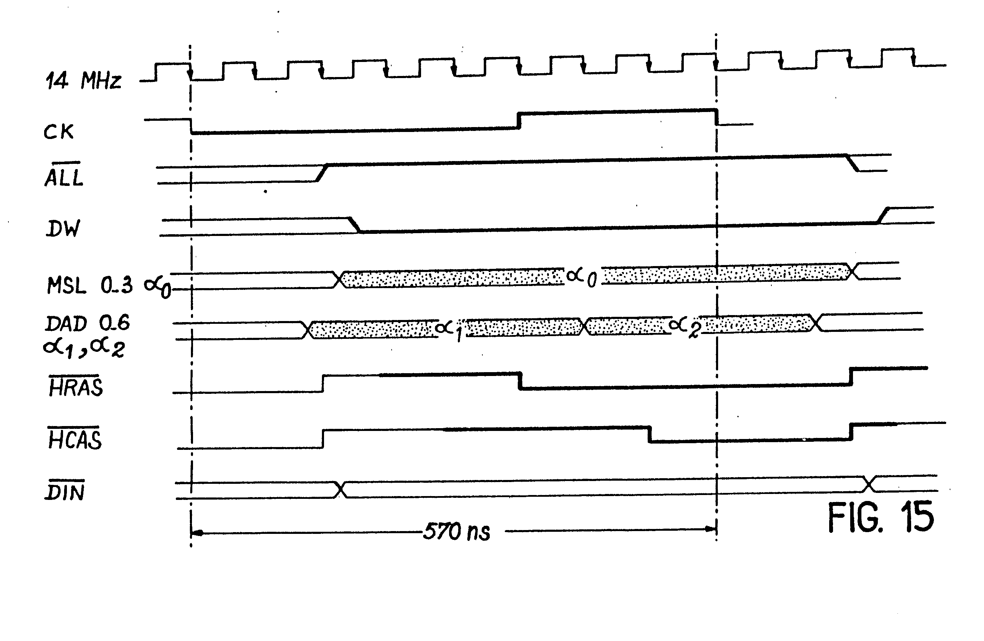

— la figure 15 est un chronogramme montrant un cycle d'écriture en mémoire d'image,

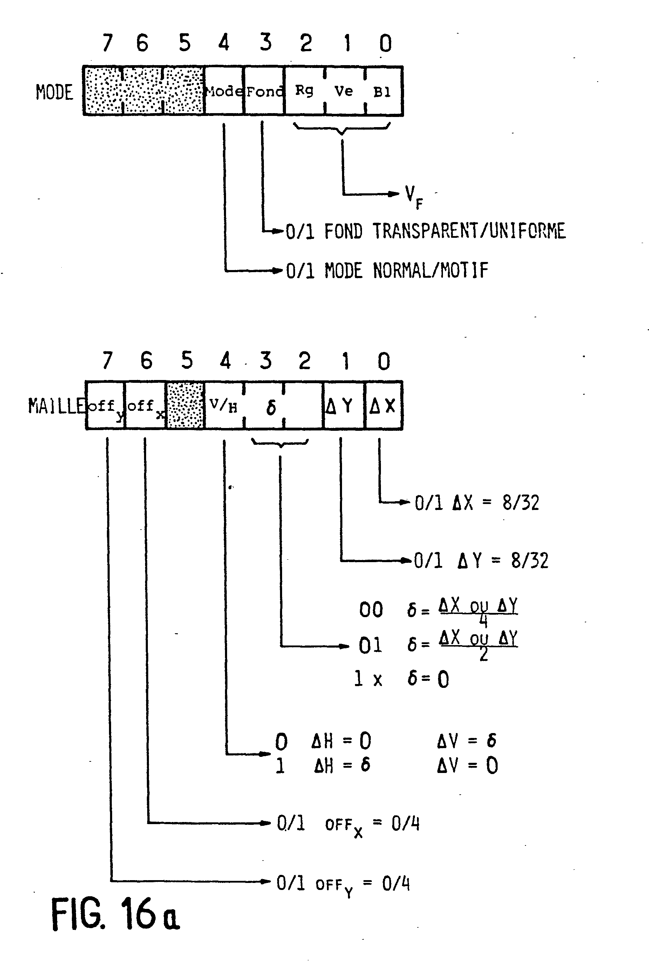

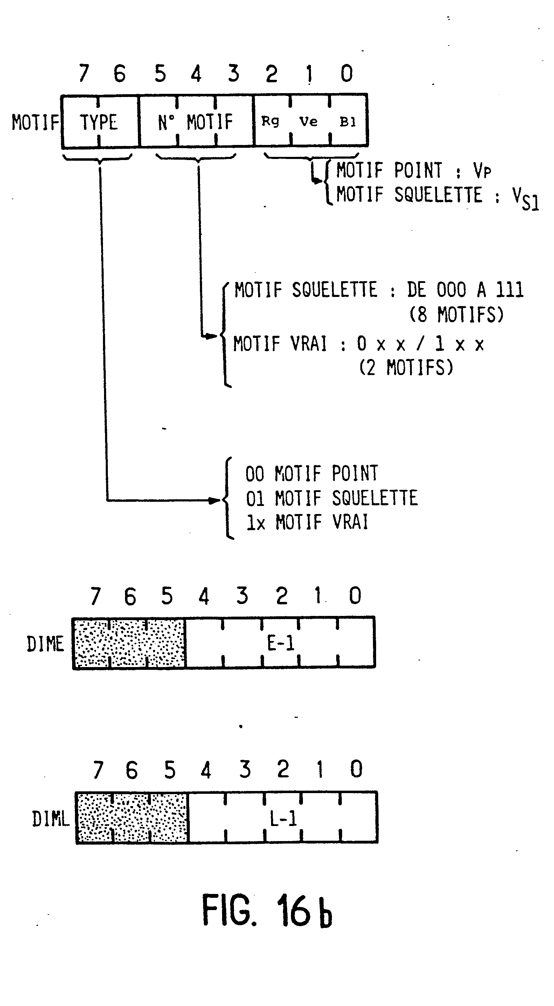

— la figure 16a montre la structure des mots numériques définissant le mode de fonctionnement et la maille utilisée,

— la figure 16b montre la structure des mots numériques définissant le motif et des signaux particuliers DIME et DIML,

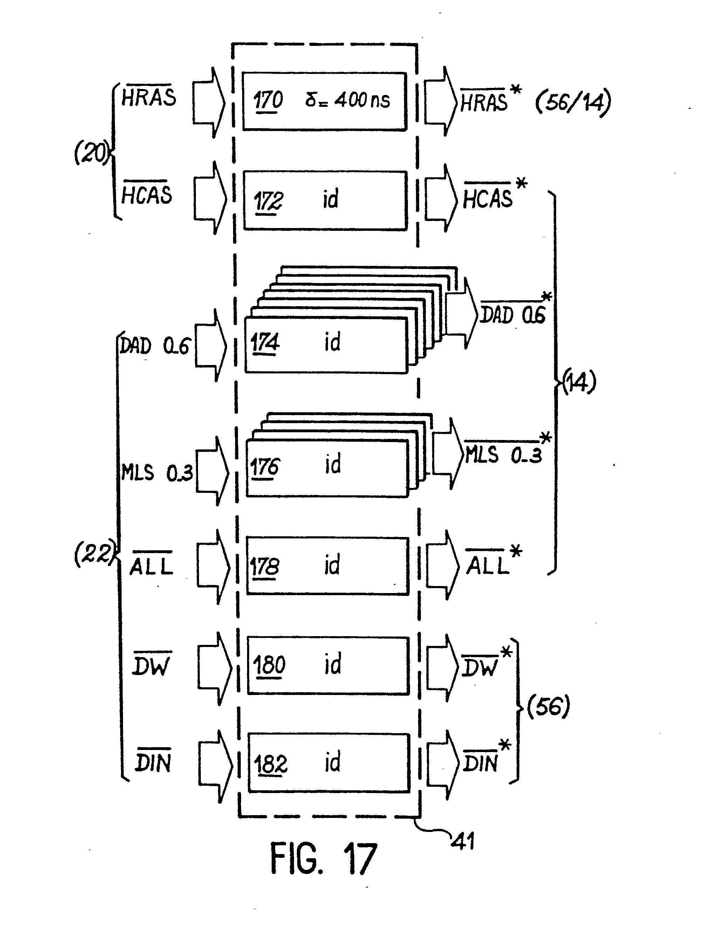

— la figure 17 illustre un mode particulier de réalisation du circuit de transmission du cycle mémoire,

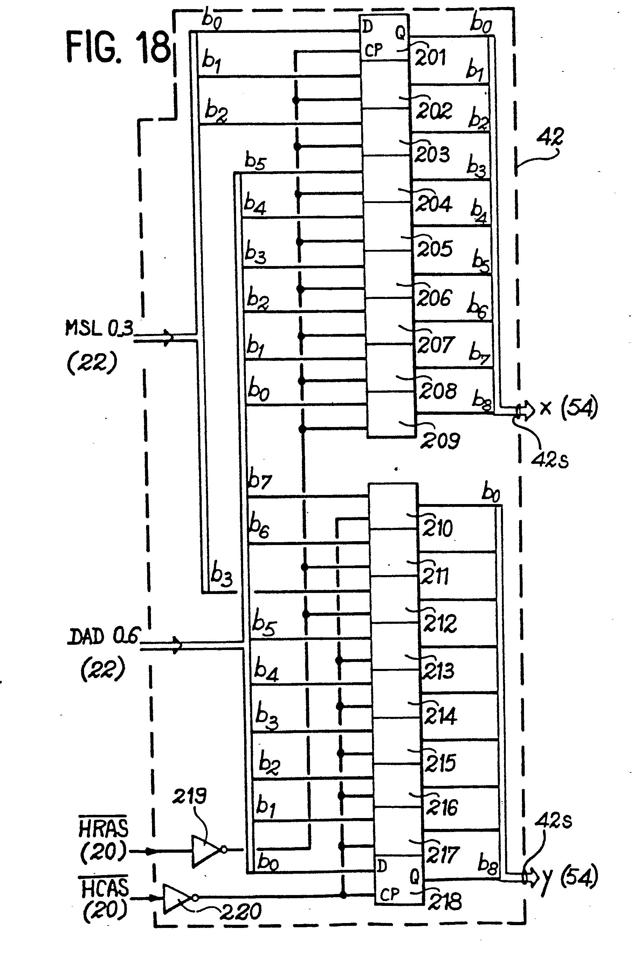

— la figure 18 illustre un mode particulier de réalisation du circuit de mise en forme des coordonnées x, y,

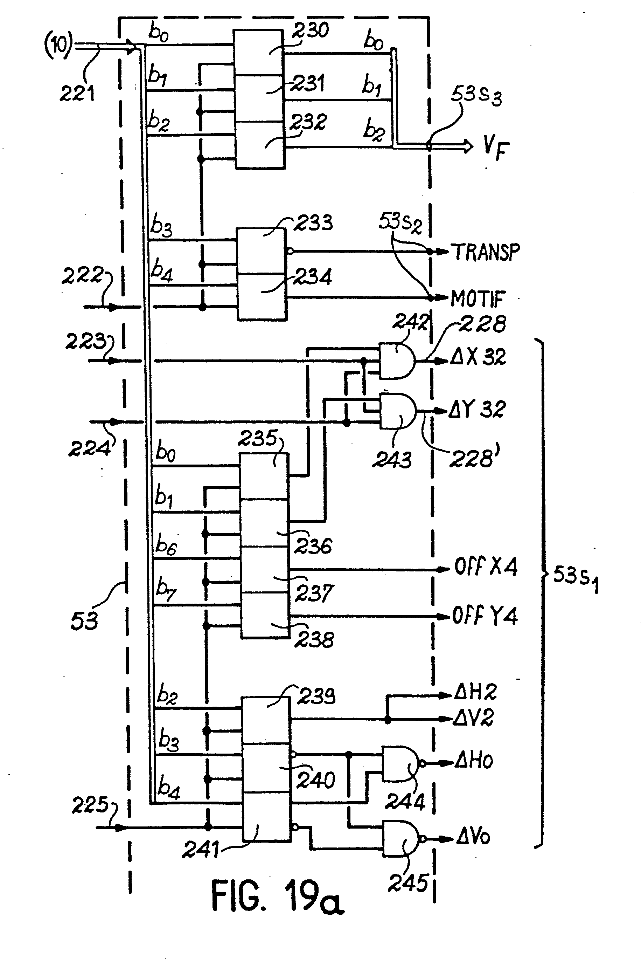

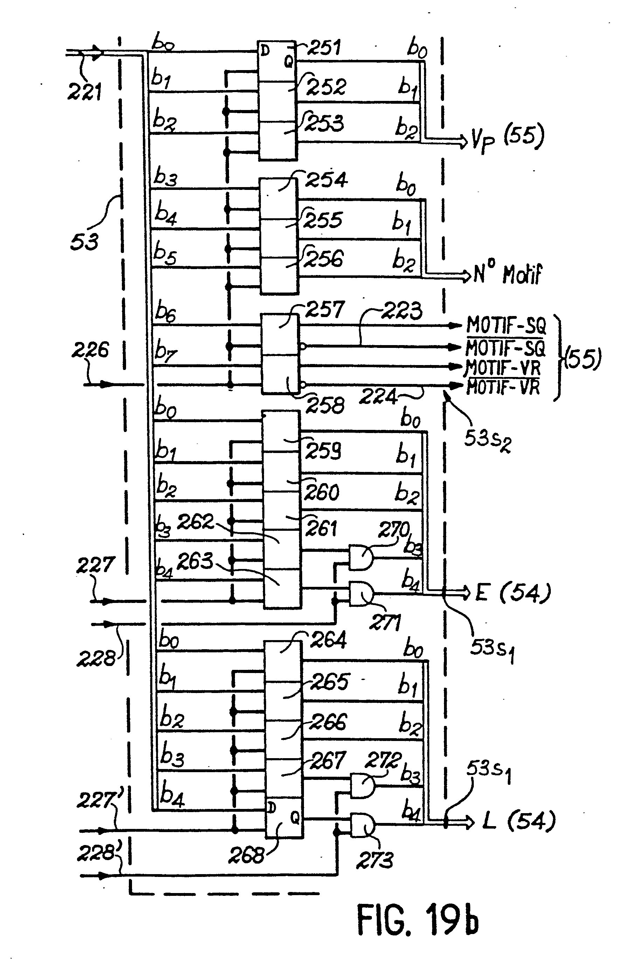

— les figures 19a et 19b illustrent un mode particulier de réalisation du circuit de paramétrage de fonctionnement,

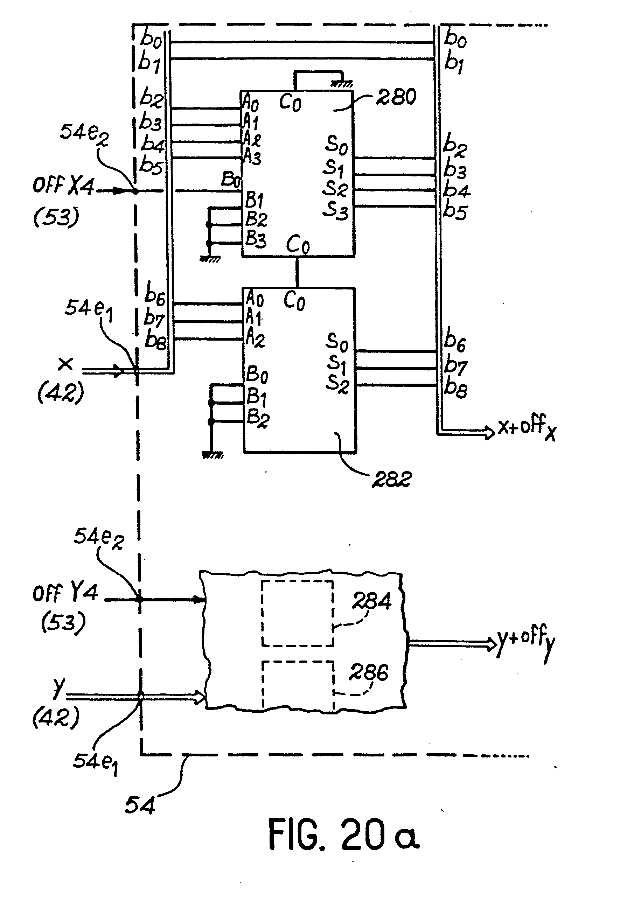

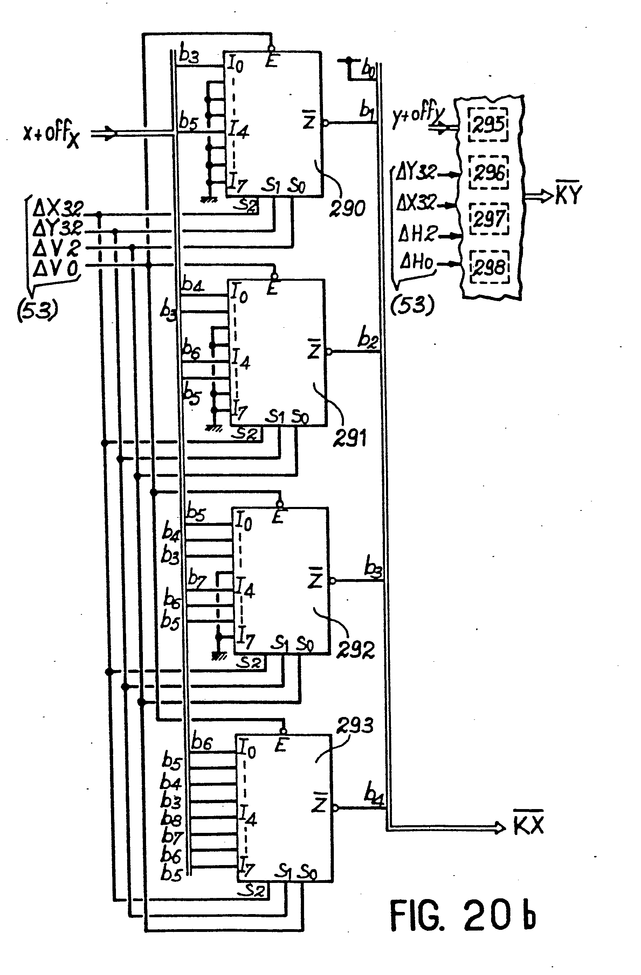

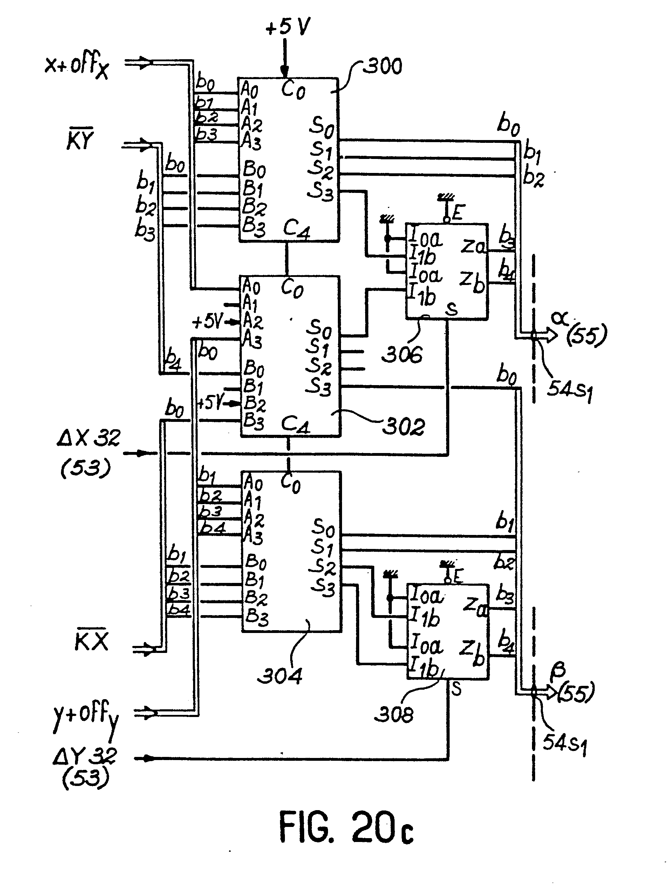

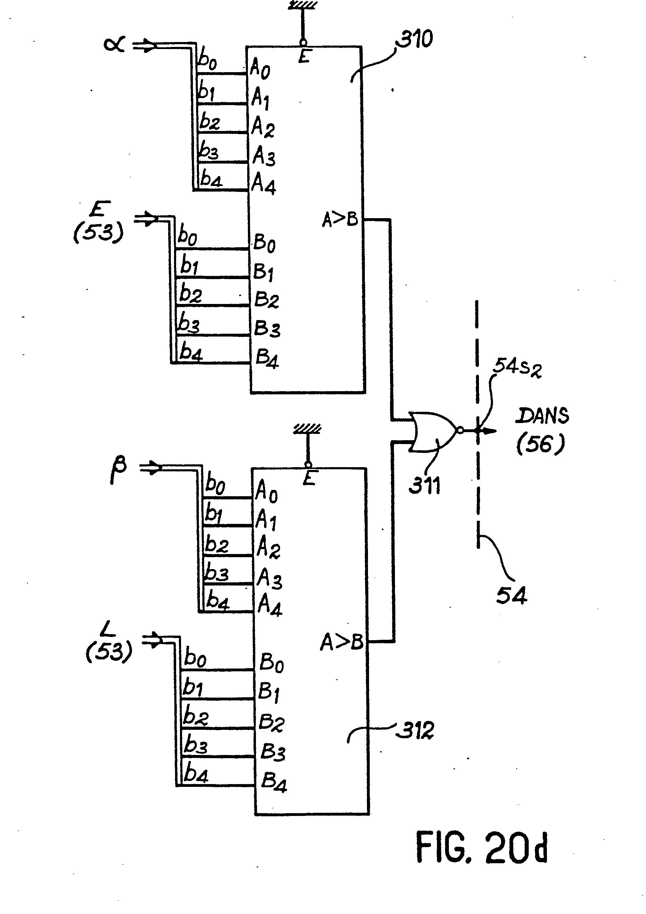

— les figures 20a, 20b, 20c, 20d illustrent un mode particulier de réalisation du circuit de calcul des coordonnées α et β,

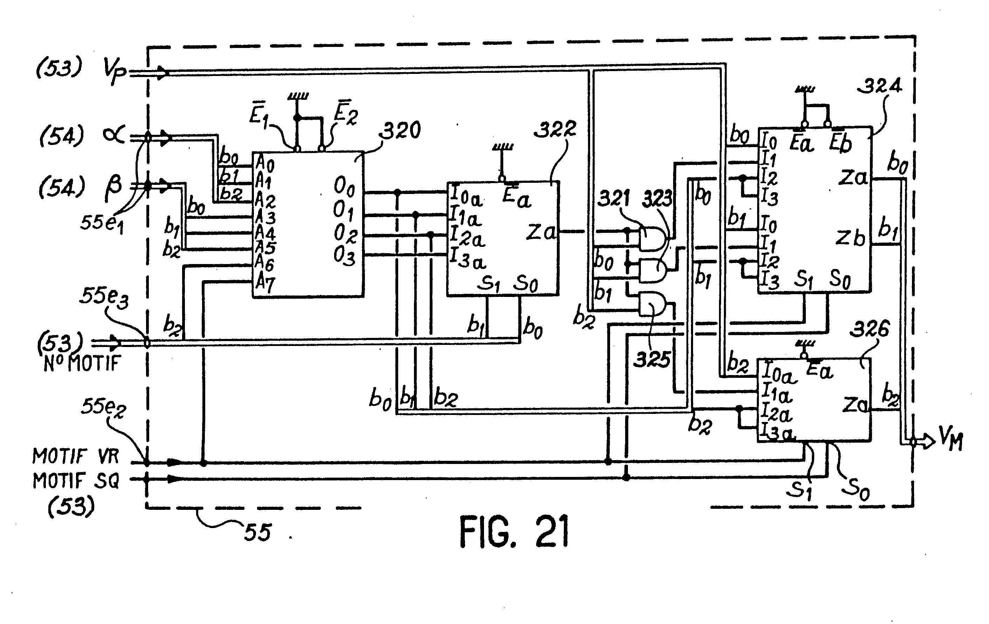

— la figure 21 illustre un mode particulier de réalisation du circuit de mémoire de motifs,

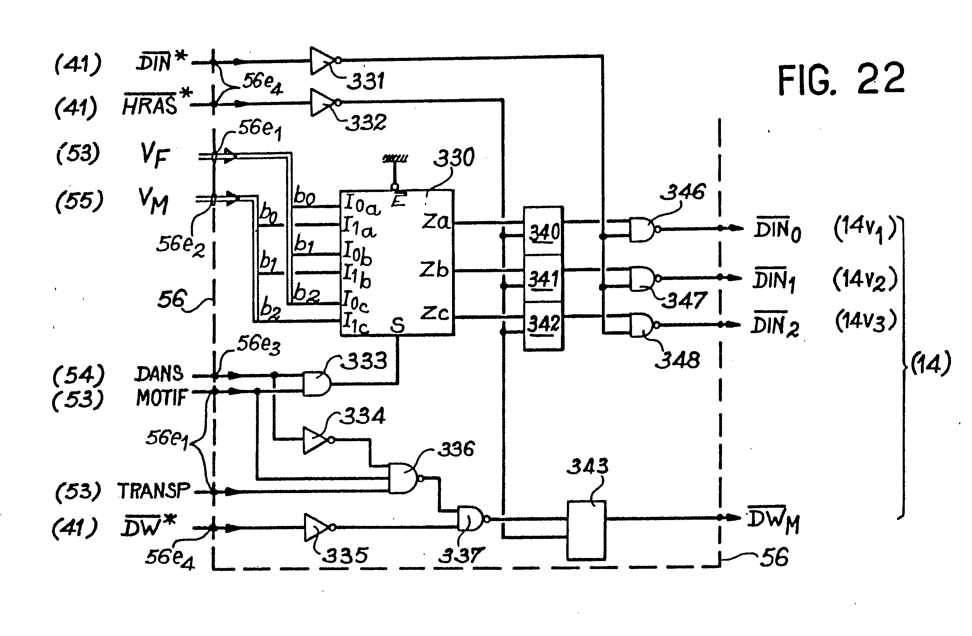

— la figure 22 illustre un mode particulier de réalisation du circuit de sélection de configuration,

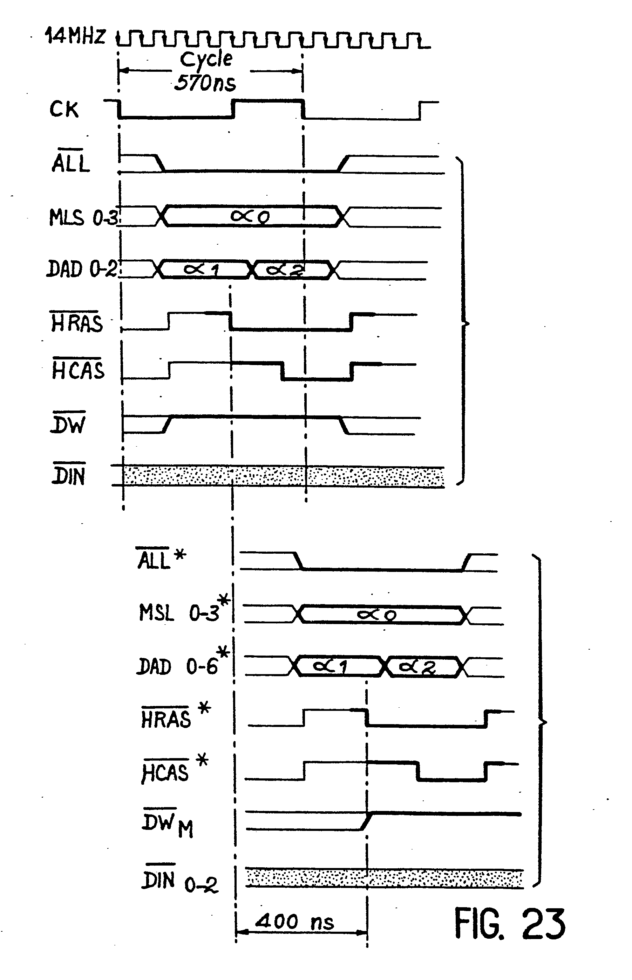

— la figure 23 est un chronogramme montrant le cycle de lecture et de rafraîchissement,

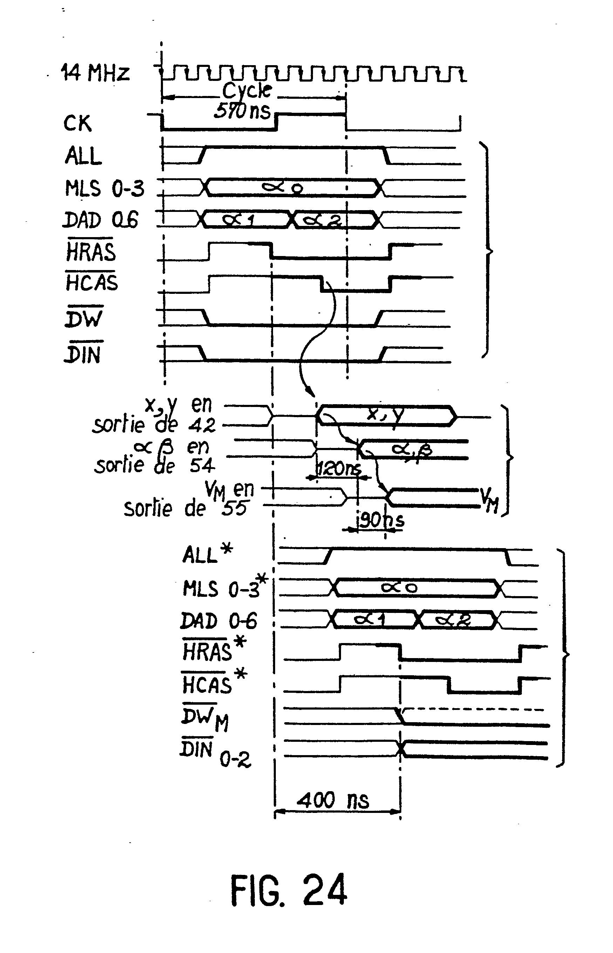

— la figure 24 est un chronogramme montrant le cycle d'écriture en mémoire d'image,

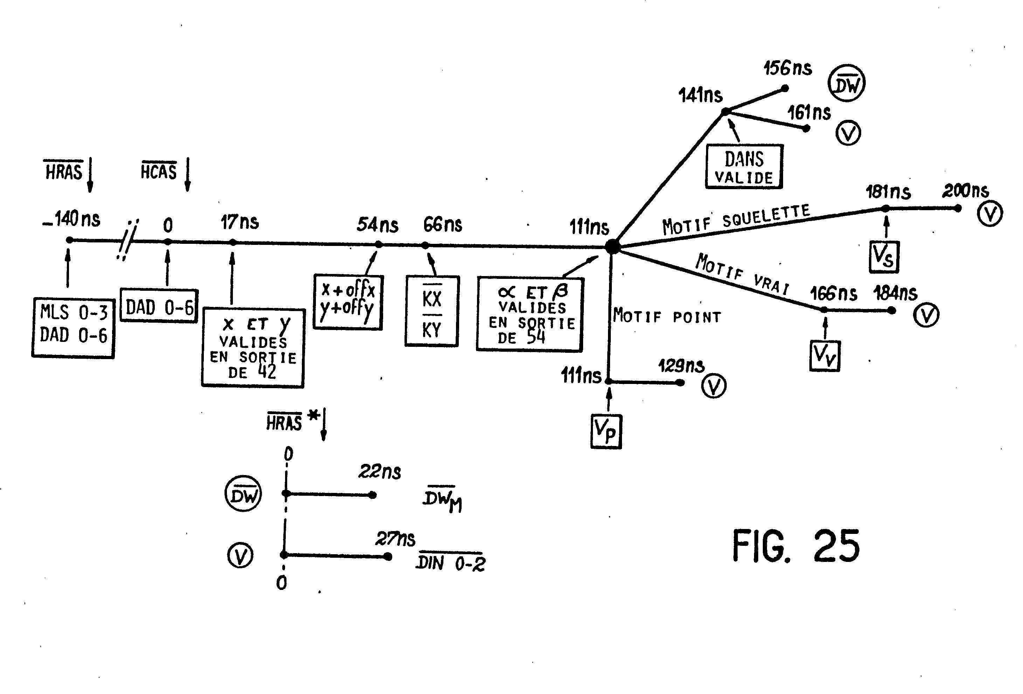

— la figure 25, enfin est un chronogramme interne.

Le système d'écriture en mémoire d'image de signaux de texture d'image, qui, sur la figure 5, porte la référence 30, est représenté de manière synoptique sur la figure 10. Ce système comprend essentiellement deux parties: une partie 40, de traitement du cycle d'accès à la mémoire d'image et une partie 50 de détermination du mot à écrire en mémoire. Ces deux parties vont être décrites tour à tour.

La première, tout d'abord, comprend:

$A_1$)— un circuit 41 de transmission avec retard des signaux de commande du cycle d'accès à la mémoire; ce circuit 41 possède une première entrée $4le_1$ reliée au second groupe de sorties $20e_2$ du séquenceur 20 et $22s_1$ du processeur d'affichage graphique 22; cette entrée reçoit des signaux de commande SC; il possède une seconde entrée $41e_2$ reliée au second groupe de sorties $22e_2$ du processeur d'affichage graphique 22. Cette seconde entrée reçoit des signaux d'adresse SAd; le circuit 41 possède une première sortie $41s_1$ délivrant les signaux de commande SC* retardés d'une durée fixe, et une seconde sortie $41s_2$ délivrant des signaux d'adresse retardés de la même durée, soit SAd*; la première sortie $41s_1$ est reliée à l'entrée de commande 14C de la mémoire d'image 14 et la seconde sortie $41s_2$ à l'entrée d'adressage 14Ad de cette mémoire d'image;

$A_2$)— un circuit 42 de mise en forme; ce circuit possède une entrée 42e reliée au second groupe de sortie $22s_2$ du processeur d'affichage graphique 22 d'où il reçoit des signaux d'adresses SAd; il possède une sortie 42s délivrant deux signaux x, y représentant des coordonnées (dans les plans de la mémoire d'image) du point ayant l'adresse appliquée à l'entrée 42e.

La partie 50 de détermination du mot à écrire en mémoire comprend:

$B_1$)— tout d'abord un circuit 53 de paramétrage de fonctionnement; ce circuit possède: une entrée 53e reliée au second groupe $10s_2$ de sortie du microordinateur 10 et recevant, de ce microordinateur, des signaux précisant des modalités de fonctionnement du système; une première sortie $53s_1$ délivrant huit signaux, respectivement $\Delta X$, $\Delta Y$, $\Delta H$, $\Delta V$, $off_x$, $off_y$, E, L définissant un motif répétitif correspondant à une texture d'image particulière; une deuxième sortie $53s_2$ délivrant des signaux CHOIX sélectionnant le motif à utiliser dans la texture à afficher; une troisième sortie $53s_3$ délivrant des signaux (VF, modes) définissant un mode de fonctionnement parmi plusieurs (avec ou sans motif, fond uniforme ou transparent);

$B_2$)— un circuit de calcul 54 possédant: une première entrée $54e_1$ reliée à la sortie 42s du circuit 42 de mise en forme et recevant les signaux x, y et une seconde entrée $54e_2$ reliée à la première sortie $53s_1$ du circuit de paramétrage 53 et recevant les huit signaux que délivre cette sortie; le circuit 54 possède encore une première sortie $54s_1$ et une seconde sortie $54s_2$; ce circuit de calcul 54 est apte:

7

0 108 674

. à calculer les deux coordonnées $\alpha^*$ et $\beta^*$ mentionnées plus haut à partir des adresses x, y et des signaux $\Delta X$, $\Delta Y$, $\Delta H$, $\Delta V$, $off_x$, $off_y$ par les relations (1) et (1') indiquées plus haut;

. à déterminer si $\alpha^*$ est positif ou nul, auquel cas le circuit calcule une coordonnée relative $\alpha$ égale à $\alpha^*$ modulo $\Delta X$, sinon le circuit 54 calcule $\alpha$ par la relation:

$$[\Delta X - (|\alpha^*| \text{ modulo } \Delta X)]\text{modulo } \Delta X$$

. à déterminer si $\beta^*$ est positif ou nul, auquel cas le circuit calcule une coordonnee $\beta$ egale à $\beta^*$ modulo $\Delta Y$, sinon le circuit calcule une coordonnée relative $\beta$ par:

$$[\Delta Y - (|\beta^*| \text{ modulo } \Delta Y)]\text{modulo } \Delta Y$$

. à déterminer si la coordonnée $\alpha$ est inférieure à E et si, en même temps, la coordonnée $\beta$ est inférieure à L, auquel cas un signal (DANS) est engendré; le circuit 54 délivre sur sa première sortie $54s_1$ les coordonnées $\alpha$ et $\beta$, et sur sa seconde sortie $54s_2$ le signal (DANS);

$B_3)$ — un circuit de mémoire de motifs 55, constitué de mémoires contenant des informations définissant différents types de motifs comme indiqué plus haut et, pour chaque type, plusieurs motifs; ce circuit 55 comprend; une entrée de commande $55e_1$ reliée à la première sortie $54s_1$ du circuit de calcul 54 et recevant les coordonnées relatives $\alpha$, $\beta$; une seconde entrée de sélection $55e_2$ reliée à la seconde sortie $53s_2$ du circuit de paramétrage de fonctionnement 53, cette entrée $55e_2$ recevant des signaux CHOIX de sélection d'un motif parmi plusieurs; une troisième entrée $55e_3$ reliée à l'entrée générale $50e_1$, elle-même reliée à la sortie $10s_2$ de l'ordinateur 10 et recevant des signaux de chargement du motif; le circuit 55 possède encore une sortie $55s$ délivrant un signal $V_M$ susceptible d'être écrit dans la mémoire d'image pour le motif choisi;

$B_4)$ — un circuit de sélection de configuration 56; ce circuit possède: une première entrée $56e_1$ reliée à la troisième sortie $53s_3$ du circuit du paramétrage de fonctionnement 53 et recevant des signaux (VF/modes) déterminant un mode de fonctionnement; une deuxième entrée $56e_2$ reliée à la sortie $55s$ du circuit de mémoire de motif 55 et recevant le signal $V_M$; une troisième entrée $56e_3$ reliée à la sortie $54s_2$ du circuit de calcul 54 et recevant le signal DANS; une quatrième entrée $56e_4$ reliée à la première sortie $41s_1$ du circuit de transmission de cycle mémoire 41 et recevant le signal de commande retardé $SC^*$; ce circuit 56 est apte, en fonction du signal DANS et du signal déterminant le mode de fonctionnement, à valider le cycle de commande défini par le signal $SC^*$ et à déterminer, en fonction du signal $V_M$ le mot V à écrire en mémoire d'image; le circuit 56 possède un premier groupe de sorties $56s_1$ reliées à la sortie générale $50s_1$ du circuit 50, elle-même reliée à l'entrée de commande 14C de la mémoire d'image et délivrant des signaux de commande d'écriture dans la mémoire, et un second groupe de sorties $56s_2$ reliées à la sortie générale $50s_2$ du circuit 50, elle-même reliée aux N entrées de validation $14V_1...14V_N$ de la mémoire d'image et délivrant le mot V à écrire dans cette mémoire.

Dans ses grandes lignes, le fonctionnement du système représenté sur la figure 10 est le suivant. Tout d'abord, s'intercalant entre le générateur d'adresses et la mémoire d'image, il se comporte vis-à-vis du premier, comme une mémoire d'image et vis-à-vis de la seconde, comme un générateur d'adresses. Pour compenser le temps de traitement inhérent au système lui-même, la première partie 40 (composée des circuits 41 et 42) transmet à la mémoire d'image les signaux qu'elle reçoit (SC et SAd) du générateur d'adresses avec un retard $\tau$ constant (d'où $SC^*$ et $SAd^*$). La première fonction du système 30 est donc une fonction de retard qui est remplie par le circuit 41. La seconde fonction de cette première partie du système est de reconstituer, à partir des signaux d'adresse SAd fournis par le générateur d'adresses, les coordonnées (x, y) du point courant. C'est le rôle dévolu au circuit 42. La seconde partie 50 a essentiellement pour fonction de traduire les coordonnées (x, y) fournies par la partie 40, en un mot V destiné à être écrit en mémoire d'image, selon des modalités définies à l'avance. C'est cette partie 50 qui met en oeuvre le processus de génération de texture décrit précédemment.

Ce processus utilise plusieurs paramètres définissant plusieurs options ou modes de fonctionnement, à savoir:

— le mode "Normal" ou le mode "Motif"; en mode "Normal" la valeur à écrire est constante (et notée $V_F$) et définie à l'avance; en mode "Motif" elle est fonction de la texture choisie (elle est notée $V_M$);

— le fond de maille, qui peut être transparent ou uniforme: pour un fond transparent, le contenu de la mémoire d'image n'est pas modifiée; pour un fond uniforme, la valeur à écrire est constante (notée $V_F$) et définie à l'avance;

— la définition du maillage: elle est donnée par les grandeurs $\Delta X$, $\Delta Y$, $\Delta H$, $\Delta V$, $off_x$, $off_y$;

— la description du motif: elle est donnée par E, L, par le type du motif et par le contenu des motifs.

Pour remplir ces diverses tâches, la partie 50 du système 30 est organisée en quatre circuits:

— le circuit 53 de paramétrage de fonctionnement,

— le circuit 54 de calcul de $\alpha$ et $\beta$,

8

— le circuit 55 de mémoire de motifs,
— le circuit 56 de sélection de la configuration.

Avant de décrire des modes de réalisation des différents circuits qui composent les parties 40 et 50, leurs fonctions vont être précisées. Leur structure en découlera immédiatement.

Le circuit 41 tout d'abord reçoit des circuits 20 et 22, les signaux d'adresses et de contrôle (SAd, C) et les transmet à la mémoire d'image avec un retard compensant le temps de réponse de l'invention (SAd*, C*). En outre, ce circuit fournit au circuit 56 trois signaux élaborés à partir des signaux de contrôle retardés:

— un signal "début de cycle" (noté DCy*) qui devient actif quand le cycle en cours commence effectivement dans le mémoire d'image,
— un signal "écriture" (Ec*), qui est la commande d'écriture fournie par le générateur d'adresses 20—22 et retardée par le circuit 41,
— un signal "plume" (P1*), qui est la commande d'écriture effective fournie par le générateur d'adresses 20—22 et retardée par le circuit 41. (Dans ces notations le signe * indique un retard d'une durée ($\tau$).

Le circuit 42 interprète les signaux d'adresse SAd pour délivrer un couple de coordonnées (x, y) stable pendant le fonctionnement de la partie 50.

Le circuit 53 de paramétrage de fonctionnement reçoit du microordinateur des commandes décrivant les modalités de fonctionnement. Ces commandes déterminent:

— le mode "Normal" ou le mode "Motif",
— le mode "Transparent" ou le mode "Uniforme" concernant le fond de maille,
— la valeur $V_F$ utilisée en mode normal ou en fond de maille uniforme,
— les valeurs $\Delta X$, $\Delta Y$, $\Delta H$, $\Delta V$, $off_x$ et $off_y$, décrivant le maillage,
— les valeurs E et L fixant la dimension du motif,
— le choix du motif utilisé.

Chacune de ces commandes peut être définie par le microordinateur et modifiable par celui-ci, ou au contraire être figée une fois pour toutes dans le système. Tous ces signaux de commande sont mémorisés dans le circuit 53, qui les aiguille ensuite vers les autres circuits de la partie 50 à savoir:

— vers le circuit 54 pour permettre le calcul de $\alpha$, $\beta$ et la détermination du signal logique "DANS",
— vers le circuit 55 de mémoire de motifs pour le choix d'un motif,
— vers le circuit 56 pour la sélection du mode Normal ou Motif, Transparent ou Uniforme et la transmission de $V_F$.

Le circuit 54 transforme les coordonnées x, y du point courant qu'il reçoit du circuit de mise en forme 42, en coordonnées relatives $\alpha$, $\beta$ et utilise pour cela les caractéristiques du maillage et des dimensions du motif comme illustré sur les figures 4a et 4b. Il élabore en outre pour le circuit de sélection 56, le signal logique "DANS".

Le circuit 55 de mémoire de motif dispose d'informations relatives à plusieurs types de motifs. Ces informations lui sont fournies par le microordinateur mais elles peuvent aussi être inhérentes à une conception particulière du système de mise en mémoire (utilisation de mémoires mortes).

Si l'on reprend les trois types de motifs déjà évoqués, la description d'un motif-point consiste en un choix d'une valeur particulière. La description d'un motif-squelette nécessite une matrice de points dont chaque élément est repéré par un indice k qui fixe la valeur de l'élément selon une table préétablie. La description d'un motif vrai nécessite une matrice complète dont chaque élément peut prendre une valeur particulière.

Pour chaque type de motif, le circuit 55 peut comporter en fait, plusieurs motifs différents:

— dans le cas de motifs-point, il faudra mémoriser alors plusieurs valeurs (une par motif), chaque valeur étant définie par un indice p (valeur notée Vp),
— dans le cas de motifs-squelette ainsi que dans celui de motif-vrai, il faudra plusieurs matrices.

Le circuit 55 reçoit du circuit de paramétrage 53 des informations logiques qui permettent de sélectionner un des trois types de motifs possibles et, dans ce type, un motif particulier. Connaissant ce motif et le couple $\alpha$, $\beta$, le circuit 55 est capable de fournir au circuit de sélection 56 la valeur $V_M$ du mot à écrire en mémoire pour le point considéré.

En ce qui concerne enfin le circuit 56, il valide le cycle d'écriture en cours et sélectionne définitivement la valeur (V) à écrire en mémoire d'image, en fonction du mode de fonctionnement choisi (Normal/Motif, Uniforme/Transparent). Pour cela il reçoit du circuit de paramètre 53 les informations concernant ce mode ainsi que la valeur $V_F$, et de la mémoire de motif 55, la valeur $V_M$ ainsi que le signal logique DANS élaboré par le circuit 54. Le tableau I ci-après décrit le fonctionnement de ce circuit en montrant dans quel cas l'écriture en mémoire d'image est bloquée (à savoir en mode "Motif" lorsque le point n'est pas dans le motif et que le fond est transparent):

TABLEAU I

| | Mode "Normal" | Mode "Motif" | | |
| --- | --- | --- | --- | --- |
| | | DANS=vrai | DANS=faux | |
| | | | fond uni-forme | fond trans-parent |
| Blocage de l'écriture | non | non | non | oui . |
| V | $V_F$ | $V_M$ | $V_F$ | |

et quel est celui des mots $V_F$ et $V_M$ qui est transmis à la mémoire d'image; ($V_M$ est transmis seulement en mode "Motif" lorsque le point traité est dans le motif).

Ainsi, le circuit 56 fournit à la mémoire d'image les N bits constituant la valeur du mot V à écrire en mémoire d'image. On observera cependant que cette écriture est ineffective dans deux cas évidents:

— lorsque le cycle en cours est un cycle de lecture de la mémoire d'image au profit du générateur vidéo,
— lorsque le cycle en cours est un cycle d'effacement d'un point: les N bits sont alors forcés à un état inactif en général 0.

On notera également qu'en pratique, les résultats fournis par le circuit 56 doivent être mémorisés pour qu'ils restent stables pendant le traitement complet d'un cycle d'accès à la mémoire d'image, pour éviter toute interférence avec le cycle suivant.

Des modes particuliers de réalisation des circuits 54, 55 et 56 vont maintenant être décrits à l'aide des figures 11, 12 et 13.

La figure 11, tout d'abord, représente le schéma d'un circuit 54 de calcul de α et β fonctionnant selon le principe exposé plus haut, dans le cas où les différentes grandeurs définissant la maille sont des puissances de 2.

Tel que représenté, le circuit comprend deux voies analogues, la première comprenant un additionneur 70 à deux entrées recevant x et $off_x$, un diviseur 72 recevant $\Delta Y$ et le résultat de l'addition effectuée par l'additionneur 80, un multiplieur 74 recevant $\Delta H$ et le résultat de la division effectuée par le diviseur 72, un soustracteur 76 relié à 70 et à 74, un circuit 78 remplissant la fonction modulo $\Delta X$ et recevant pour cela $\Delta X$ et le résultat de la soustraction effectuée par le soustracteur 76; la seconde voie comprend des circuits identiques, à savoir un additionneur 80, un diviseur 82, un multiplieur 84, un soustracteur 86, un circuit 88 de calcul de modulo $\Delta Y$.

La première voie délivre, comme il résulte directement des équations données plus haut, la coordonnée α et la seconde voie la coordonnée β. Pour obtenir le signal logique DANS (qui indique si le point considéré est à l'intérieur, ou à l'extérieur d'un motif élémentaire), le circuit 54 comprend encore un premier comparateur 90 recevant α et E, un second comparateur 92 recevant β et L et une porte logique ET 94 qui délivre le signal DANS.

La figure 12 représente un mode particulier de réalisation d'un circuit mémoire de motifs. Tel que représenté, ce circuit comprend un circuit mémoire de motifs-point 101, un circuit mémoire de motif-squelette 111 et un circuit mémoire·de motifs-vrai 131. .

Le circuit mémoire de motifs-point 101 comprend une pluralité de n mémoires $100_1...100_n$, chaque mémoire possédant une entrée reliée à la seconde sortie $10s_2$ de l'ordinateur 10. Ces mémoires contiennent des valeurs $Vp_1...Vp_n$. Le circuit comprend encore un multiplexeur 102 possédant n entrées $102e_1...102e_n$ reliées chacune à l'une des n mémoires $100_1...100_n$, une entrée de commande 102C et une sortie 102s délivrant un signal Vp.

Le circuit mémoire de motifs-squelette 111 comprend une mémoire 110 formée de plusieurs plans-mémoire, chaque plan ayant une entrée de validation 112, une entrée de chargement 113 reliée à la seconde sortie $10s_2$ de l'ordinateur 10 et une entrée d'adressage 114 reliée à la sortie $54s_1$ du circuit 54. Ces plans mémoire ont une sortie commune 116. Le circuit comprend encore une pluralité de n' mémoires $120_1...120_{n'}$, n' étant un entier au moins égal à 1, contenant chacune un mot particulier $Vs_1...Vs_{n'}$. Le circuit comprend enfin un multiplexeur 122 à n' entrées $122e_1...122e_{n'}$, reliées chacune à l'une des mémoires $120_1...120_n$, à une entrée de commande 122C reliée à la sortie commune 116 de la mémoire 110 et à une sortie 122s délivrant un mot Vs caractérisant le motif-squelette sélectionné.

Le circuit mémoire de motifs-vrais 131 comprend une mémoire 130 formée de plans constitués chacun d'une matrice de points-mémoire, chaque plan de cette mémoire 130 ayant une entrée de validation 132, une entrée de chargement 133 reliée au second groupe de sortie $10s_2$ de l'ordinateur 10, une entrée d'adressage 134 reliée à la sortie $54s_1$ du circuit de calcul 54 et une sortie unique 136 délivrant un signal Vv propre au motif sélectionné.

Le fonctionnement de ces circuits mémoire résulte de ce qui a été exposé plus haut à propos de la manière de sélectionner un motif. Pour le circuit 101, il suffit d'appliquer à l'entrée de commande 102C du multiplexeur 102 le signal qui validera l'entrée correspondant à la mémoire choisie parmi les n disponibles. Pour le circuit 111 le même processus permet de sélectionner l'une des n' mémoires reliées au multiplexeur 122, à cette différence que le signal appliqué à l'entrée de commande 122C change dans un même motif (indice k), ce qui permet de définir le squelette du motif. Pour le circuit 131, il n'y a plus de multiplexage, puisque c'est tout le contenu d'un des plans mémoire 130 qui est utilisé.

En plus de ces trois circuits 101, 111, et 131, le circuit mémoire de motifs 55 comprend un circuit logique de sélection 138 possédant une entrée 138e reliée à la deuxième sortie $53s_2$ du circuit du paramétrage de fonctionnement 53 et recevant un signal déterminant le choix d'un motif, une première sortie $138s_1$ délivrant un signal déterminant un motif, cette sortie étant reliée à l'entrée de commande 102C du multiplexeur 102 du circuit mémoire de motifs-point 101 ainsi qu'à l'entrée 112 de validation d'un des plans-mémoire de la mémoire 110 du circuit mémoire de motifs-squelette 111, ainsi encore qu'à l'entrée 132 de validation d'un des plans-mémoire de la mémoire 130 du circuit mémoire de motifs-vrais 131; le circuit 138 possède encore une seconde sortie $138s_2$ délivrant un signal déterminant le type de motif sélectionné (motif-point, motif-squelette, motif-vrai).

Enfin, le circuit 55 comprend un multiplexeur 140 à trois entrées $140e_1$, $140e_2$, $140e_3$ reliées aux sorties des circuits mémoire de motifs 101, 111, 131, à une entrée de commande 140C reliée à la seconde sortie $138s_2$ du circuit logique de sélection 138 et à une sortie 140s délivrant le mot $V_M$ sélectionné pris parmi Vp, Vs et Vv. Cette sortie 140s constitue la sortie 55s du circuit global de mémoire de motifs, laquelle est reliée à la deuxième entrée $56e_2$ du circuit de sélection 56.

Le circuit 56 de sélection de configuration est représenté sur la figure 13, il comprend:

— un circuit logique de décodage 150 à trois entrées, deux reliées à $56e_1$ et recevant respectivement les signaux N/M et U/T déterminant les modes Normal/Motif et Uniforme/Transparent et la troisième reliée à $56e_3$ d'où elle reçoit le signal DANS venant de 54,
— un multiplexeur 152 à deux entrées de N bits reliées l'une à $56e_1$ d'où elle reçoit $V_F$ venant de 53 et l'autre à $56e_2$ d'où elle reçoit $V_M$ venant de 55, ce multiplexeur étant commandé par le circuit logique 150,
— un premier circuit de mémorisation 154 relié à 150 et mémorisant le signal de validation d'écriture, ce circuit étant commandé par le signal retardé indiquant le début de cycle (DCy*) venant de 41,
— un second circuit 156 de mémorisation du signal délivré par le multiplexeur 152, ce circuit étant lui aussi commandé par DCy*,
— une première porte logique ET 158 à deux entrées, l'une reliée à 154 et l'autre à l'une des entrées $56e_4$ d'où elle reçoit le signal retardé d'écriture (EC*) venant de 41 et dont la sortie est reliée à la sortie $56s_1$,
— une seconde porte logique ET 160 à deux entrées, l'une reliée à 156 et l'autre à l'une des entrées $56e_4$ d'où elle reçoit le signal retardé de Plume (P1*), cette porte possédant une sortie délivrant le mot V apparaissant sur la sortie $56s_2$.

Le fonctionnement de ce circuit est le suivant. Les signaux appliqués à la logique de décodage 150 commandent le multiplexeur 152 qui délivre soit $V_M$, soit $V_F$, le mot sélectionné étant mémorisé dans 156 au début du cycle d'écriture retardé. La sortie $56s_1$ délivre le signal de contrôle d'écriture de la mémoire d'image et la sortie $56s_2$ le mot V à écrire.

La figure 14 donne le chronogramme de fonctionnement du système global 30. Les signaux de contrôle (SC) et d'adressage (SAd) figurent sur les deux premières lignes. Les deux lignes suivantes montrent l'apparition des signaux x, y et α, β. La cinquième ligne correspond à la disponibilité du mot V à écrire en mémoire. Ce mot V est disponible avec un retard τ par rapport au début du cycle d'écriture. Les signaux de contrôle et d'adresse (SC*, SAd*) doivent alors être appliqués à la mémoire d'image avec ce retard τ.

Ce chronogramme permet d'observer:

— que V doit être obtenu dans un délai inférieur au cycle d'accès de la mémoire,
— que les cycles définis par le processeur 22 étant décalés, il est nécessaire de les mémoriser, et c'est l'un des rôles du circuit 56.

Les figures 15 et suivantes se rapportent à un exemple particulier de réalisation du système qui vient d'être décrit. Les caractéristiques de ce système sont les suivantes: le processeur graphique 22 est le circuit 9365 GDP de EFCIS, qui sera désigné par la suite par ses initiales GDP (pour "Graphic Display Processor"); le microordinateur est organisé autour d'un CPU 6800; la mémoire d'image est formée de trois plans de 512×512 bits chacun, réalisés en mémoire dynamique (circuits du type EF 4116); à chaque plan est affectée une couleur primaire du signal vidéo (rouge, vert ou bleu); les tracés sont effectués à grande vitesse (1 point est défini et écrit en moins de 2 μs).

La figure 3, déjà décrite, correspond justement à ce mode particulier de réalisation dans la mesure où les notations qui y figurent ($\overline{DW}$, DAD, MSL, $\overline{ALL}$, BLK, SYNC, $\overline{DIN}$, $\overline{HCAS}$, $\overline{HRAS}$) sont celles qu'utilise le constructeur.

Dans ce mode de réalisation, le GDP 22 remplit trois fonctions:

— détermination des points constituant un tracé: c'est la fonction générateur d'adresse mémoire (GAM) déjà évoquée,

— gestion des accès en mémoire d'image: le GDP règle les conflits d'accès en multiplexant dans le temps les accès en écriture (bit par bit) dus aux tracés, les accès en lecture (octet par octet) pour le générateur vidéo, et les accès de rafraîchissement des mémoires dynamiques,

— contrôle du signal vidéo: le GDP fournit le signal de synchronisation du générateur vidéo (ligne et trame) et synchronise la lecture de la mémoire avec ce signal.

La notice d'utilisation du circuit EF 9365 donne le détail du fonctionnement de ce circuit et précise la forme des différents signaux qu'il délivre ($\overline{DW}$, $\overline{DIN}$, DAD, MSL, $\overline{ALL}$, DOUT, SYNC).

Le séquenceur 20 délivre, quant à lui, les différents signaux d'horloges nécessaires: un signal CK pour le GDP, deux signaux $\overline{HRAS}$, $\overline{HCAS}$ pour les mémoires dynamiques et un signal d'horloge CK' pour le générateur vidéo. Ce séquenceur est piloté par un oscillateur à 14 MHz.

La mémoire d'image est constituée de trois plans identiques constitués chacun de 16 boîtiers EF 4116. Un plan reçoit les signaux d'adresse, le signal $\overline{DW}$ (écriture/lecture) fourni par le GDP, un signal de validation $\overline{DIN}_1$, $\overline{DIN}_2$ ou $\overline{DIN}_3$ selon son rang.

Le générateur vidéo, piloté par le séquenceur, met en forme le signal de synchronisation (SYNC) élaboré par le GDP, et élabore à partir du signal DOUT, trois signaux de couleurs primaires R, V et B.

La figure 15 donne le chronogramme d'un cycle d'accès en écriture pour un point; ce cycle est déclenché par le GDP. La référence temporelle est le signal d'horloge CK pilotant le GDP et dont le période est de 570 ns. Dans un tel cycle, l'adresse d'un point telle qu'elle est fournie par le GDP, est représentée par 9 bits pour $x(x_0,...x_8)$ et 9 bits pour $y(y_0,...y_8)$, soit 18 bits. Une adresse est exprimée par les quatre signaux MSL de 0 à 3 et les sept signaux DAD de 0 à 6. Durant un cycle, les MSL 0—3 sont fixes. Par contre les DAD 0—6 sont multiplexés dans le temps. Les 18 bits d'adresse sont organisés en trois blocs notés $\alpha_0$, $\alpha_1$, $\alpha_2$ ainsi définis:

— $\alpha_0$ est fourni par MSL 0—3 et est fixe pendant tout le cycle,
— $\alpha_1$ est fourni par DAD 0—6 pendant que CK=0, et est échantillonné par la transition descendante de $\overline{HRAS}$,
— $\alpha_2$ est fourni par DAD 0—6 pendant que CK=1, et est échantillonné par la transition descendante de $\overline{HCAS}$.

La répartition des $x_i$ et $y_i$ sur les MSL 0—3 et DAD 0—6 est donnée par le tableau II ci-après:

TABLEAU II

| CK | MSL: | 0 | 1 | 2 | 3 | DAD: | 0 | 1 | 2 | 3 | 4 | 5 | 6 |
|----|------|---|---|---|---|------|---|---|---|---|---|---|---|
| 0 | | | | | | | $x_8$ | $x_7$ | $x_6$ | $x_5$ | $x_4$ | $x_3$ | $y_1$ |
| | | $x_0$ | $x_1$ | $x_2$ | $y_2$ | | | | | | | | |
| 1 | | | | | | | $y_8$ | $y_7$ | $y_6$ | $y_5$ | $y_4$ | $y_3$ | $y_0$ |

La signification des signaux constituant l'interface d'accès à la mémoire d'image est la suivante:

DAD 0—6: adresse mémoire, multiplexés selon CK,
MSL 0—3: adresse mémoire (complément de DAD 0—6 pour les accès par point),
$\overline{ALL}$ accès par octet si ce signal est égal à 0 auquel cas MSL 0—3 sont sans signification; ou accès par point si ce signal est égal à 1,
$\overline{DW}$ accès en écriture lorsqu'il est égal à 0 ou en lecture ou rafraîchissement s'il est égal à 1,
$\overline{DIN}$ 0—2 valeurs à écrire dans les plans 0—2; si $\overline{DIN}$=0, le point sera visible à l'écran,
$\overline{HRAS}$,$\overline{HCAS}$ : signaux de commandes des mémoires dynamiques.

Dans le mode de réalisation décrit, les différents maillages possibles sont définis par:

— 2 valeurs de $\Delta X$, respectivement 8 et 32,
— 2 valeurs de $\Delta Y$, respectivement 8 et 32,
— 3 valeurs de $\Delta H$ pour $\Delta V$=0, respectivement 0,

$$\frac{\Delta X}{4}, \qquad \frac{\Delta X}{2},$$

— 3 valeurs de $\Delta V$ pour $\Delta H=0$, respectivement 0,

$$\frac{\Delta Y}{4}, \qquad \frac{\Delta Y}{2},$$

— 2 valeurs de $off_x$, respectivement 0 et 4,
— 2 valeurs de $off_y$, respectivement 0 et 4.

On dispose ainsi de 20 maillages différents, chacun pouvant prendre 4 positions dans une image. Certains de ces maillages sont justement représentés sur les figures 6, 7 et 8 déjà décrites.

Les trois types de motif évogués plus haut sont utilisés dans le mode de réalisation décrit ici:

a)— des motifs-point, représentés par une valeur Vp modifiable par programme,
b)— des motifs-squelette comprennent huit variantes figées à la définition du système; ces squelettes sont décrits par des matrices à éléments binaires égaux à 0 ou à 1,
c)— des motifs-vrais: on dispose de deux motifs prédéterminés.

Les dimensions E et L des motifs sont figées à la définition du système pour les motifs-squelette et les motifs-vrais, et programmables, dans les limites respectives de $\Delta X$ et $\Delta Y$, dans le motif-point.

Le tableau III ci-après donne, pour E=L=8 des exemples de motifs-squelette définis sous forme de matrices d'éléments binaires égaux à 0 ou 1 (cf. les mémoires matricielles 110 de la figure 12). Pour 0 le signal Vs est nul; pour 1, il est égal à une valeur mémorisée (cf. les mémoires $120_1...120_n$, de la figure 12).

TABLEAU III

| 0 | 1 | 2 | 3 |
|---|---|---|---|
| 1 0 0 0 1 0 0 0 | 1 0 1 0 1 0 1 0 | 1 0 1 0 1 0 1 0 | 1 0 1 0 1 0 1 0 |
| 0 0 0 0 0 0 0 0 | 0 0 0 0 0 0 0 0 | 0 1 0 0 0 1 0 0 | 0 1 0 1 0 1 0 1 |
| 0 0 0 0 0 0 0 0 | 0 0 1 0 0 0 1 0 | 1 0 1 0 1 0 1 0 | 1 0 1 0 1 0 1 0 |
| 0 0 0 0 0 0 0 0 | 0 0 0 0 0 0 0 0 | 0 0 0 0 0 0 0 0 | 0 0 0 1 0 0 0 1 |
| 1 0 0 0 1 0 0 0 | 1 0 1 0 1 0 1 0 | 1 0 1 0 1 0 1 0 | 1 0 1 0 1 0 1 0 |
| 0 0 0 0 0 0 0 0 | 0 0 0 0 0 0 0 0 | 0 1 0 0 0 1 0 0 | 0 1 0 1 0 1 0 1 |
| 0 0 0 0 0 0 0 0 | 0 0 1 0 0 0 1 0 | 1 0 1 0 1 0 1 0 | 1 0 1 0 1 0 1 0 |
| 0 0 0 0 0 0 0 0 | 0 0 0 0 0 0 0 0 | 0 0 0 0 0 0 0 0 | 0 0 0 1 0 0 0 1 |

| 4 | 5 | 6 | 7 |
|---|---|---|---|
| 1 1 1 0 1 1 1 0 | 1 1 1 1 1 1 1 1 | 1 1 1 1 1 1 1 1 | 1 1 1 1 1 1 1 1 |
| 0 1 0 1 0 1 0 1 | 0 1 0 1 0 1 0 1 | 1 1 0 1 1 1 0 1 | 1 1 1 1 1 1 1 1 |
| 1 0 1 0 1 0 1 0 | 1 0 1 1 1 0 1 1 | 1 1 1 1 1 1 1 1 | 1 1 1 1 1 1 1 1 |
| 0 1 0 1 0 1 0 1 | 0 1 0 1 0 1 0 1 | 0 1 0 1 0 1 0 1 | 0 1 1 1 0 1 1 1 |
| 1 1 1 0 1 1 1 0 | 1 1 1 1 1 1 1 1 | 1 1 1 1 1 1 1 1 | 1 1 1 1 1 1 1 1 |
| 0 1 0 1 0 1 0 1 | 0 1 0 1 0 1 0 1 | 1 1 0 1 1 1 0 1 | 1 1 1 1 1 1 1 1 |
| 1 0 1 0 1 0 1 0 | 1 0 1 1 1 0 1 1 | 1 1 1 1 1 1 1 1 | 1 1 1 1 1 1 1 1 |
| 0 1 0 1 0 1 0 1 | 0 1 0 1 0 1 0 1 | 0 1 0 1 0 1 0 1 | 0 1 1 1 0 1 1 1 |

13

Le tableau IV donne deux exemples de motifs-vrais composés de motifs colorés, le premier de carrés imbriqués bicolores et le second d'un triangle sur fond coloré.

TABLEAU IV

| 0 | 1 |
|---|---|
| 3 3 3 3 3 3 3 3 | 1 1 1 6 6 1 1 1 |
| 3 3 3 3 3 3 3 3 | 1 1 1 6 6 1 1 1 |
| 3 3 5 5 5 5 3 3 | 1 1 6 6 6 6 1 1 |
| 3 3 5 5 5 5 3 3 | 1 1 6 6 6 6 1 1 |
| 3 3 5 5 5 5 3 3 | 1 6 6 6 6 6 6 1 |
| 3 3 5 5 5 5 3 3 | 1 6 6 6 6 6 6 1 |
| 3 3 3 3 3 3 3 3 | 6 6 6 6 6 6 6 6 |
| 3 3 3 3 3 3 3 3 | 6 6 6 6 6 6 6 6 |

Le tableau V donne la correspondance entre la valeur des éléments du tableau IV et les couleurs primaires R, V, B.

TABLEAU V

| V | R | V | B | Teinte |
|---|---|---|---|--------|
| 0 | 0 | 0 | 0 | Noir |
| 1 | 0 | 0 | 1 | Bleu |
| 2 | 0 | 1 | 0 | Vert |
| 3 | 0 | 1 | 1 | Cyan |
| 4 | 1 | 0 | 0 | Rouge |
| 5 | 1 | 0 | 1 | Magenta |
| 6 | 1 | 1 | 0 | Jaune |
| 7 | 1 | 1 | 1 | Blanc |

On décrit maintenant la structure des signaux que le microordinateur 10 délivre au système 30 de l'invention, pour lui préciser ses modalités de fonctionnement. Il s'agit de 5 octets, décrits dans les figures 16a et 16b. Ces 5 octets sont:

— un octet MODE (figure 16a en haut): il définit les deux modes de fonctionnement Normal/Motif et Transparent/Uniforme; il donne également la valeur $V_F$ utilisée en mode normal et en fond uniforme. Le mode est fixé par le bit de rang 4, le fond par le bit de rang 3 et $V_F$ par les trois bits de poids faible;

— un octet MAILLE (figure 16a en bas): il définit les valeurs $\Delta X$ (bit 0), $\Delta Y$ (bit 1), $\Delta H$ et $\Delta V$ (bits 2, 3, 4), off$_x$ (bit 6), off$_y$ (bit 7);

— un octet MOTIF (figure 16b en haut): il définit par ses deux bits de poids fort, le type de motif (00=motif point, 01=motif sque lette, 11 ou 10=motif vrai); les bits 3, 4, 5 déterminent, pour le motif-squelette, l'un des huit motifs disponibles (de 000 à 111) et, pour le motif-vrai, l'un des deux motifs disponibles selon que le bit 5 est égal à 0 ou à 1; les bits 0, 1 et 2 déterminent une valeur de Vp parmi 8 ou une valeur de Vs parmi 8;

— un octet DIME (figure 16b milieu): il donne par ses 5 bits de point faible la valeur de E-1 pour le motif-point,

— un octet DIML (figure 16b en bas): il donne par ses 5 bits de poids faible la valeur de L-1 pour le motif point.

**0 108 674**

Le circuit 41 de transmission du cycle mémoire est illustré sur la figure 17. Il comprend 16 lignes à retard (par exemple de type DDU-3J-5500, fournissant un retard de 400 ns), respectivement 170, 172, 174 (6 lignes groupées), 176 (4 lignes groupées), 178, 180 et 182.

Les signaux d'adresse DAD 0—6, MSL 0—3 et de contrôle $\overline{ALL}$ $\overline{DW}$, $\overline{DIN}$ venant du GDP 22 d'une part et $\overline{HRAS}$ et $\overline{HCAS}$ venant du séquenceur 20 d'autre part, sont retardés par ces lignes d'une même durée (en l'occurrence 400 ns).

Les 14 signaux retardés ainsi obtenus, $\overline{DAD}$ 0—6*, $\overline{MSL}$ 0—3*, et $\overline{ALL}$* sont envoyés vers la mémoire 14. Les signaux début de cycle DCy*, plume (P1*) et écriture (Ec*) (cf. figures 10 et 13) destinés au circuit 56 sont constitués respectivement par les signaux $\overline{HRAS}$*, $\overline{DIN}$* et $\overline{DW}$*.

Un mode de réalisation du circuit 42 de mise en forme de x, y est représenté sur la figure 18. Il comprend 18 bascules D de type 74S175 respectivement 201 à 218 et deux inverseurs 219, 220. Chaque bascule possède deux entrées D et CP et une sortie Q. Les entrées D reçoivent les signaux d'adresse MSL 0—3 et DAD 0—6 provenant du GDP 22 et les entrées Q les signaux $\overline{HRAS}$ et $\overline{HCAS}$, appliqués à travers les inverseurs 219, 220. Ainsi sont échantillonnés les signaux d'adresse dès leur émission par le GDP. Le tableau II évoqué plus haut fixe la correspondance entre les signaux MSL et DAD d'une part et les bits des coordonnées x et y d'autre part. Après la transition descendante de $\overline{HCAS}$, les deux valeurs x et y sont disponibles sur les sorties 42s.

Un mode particulier de réalisation du circuit 53 de paramétrage de fonctionnement est représenté sur les figures 19a et 19b.

La partie représentée sur la figure 19a comprend 12 bascules D (de types 74LS175) référencées de 230 à 241, deux portes ET de type 74LS11 référencées respectivement 242 et 243 et deux portes NON-ET de type 7400 référencées respectivement 244 et 245. Un bus de données 221, provenant du microordinateur 10, délivre aux bascules des bits définissant les différentes caractéristiques de fonctionnement définies par les octets décrits plus haut. La connexion 222 commande le chargement de octet MODE, et la connexion 225 le chargement de l'octet MAILLE. Les deux connexions 223 et 224 qui sont respectivement les sorties $\overline{MOTIFF-SQ}$ de 257 et $\overline{MOTIF - VR}$ de 258 valident chacune les deux sorties de 235 et 236 pour obtenir respectivement ΔX 32 par la porte 242 et ΔY 32 par la porte 243.

La partie représentée sur la figure 19b comprend 18 bascules D de type 74LS175, référencées 251 à 268 et quatre portes ET de type 7408 référencées 270 à 273. Ces bascules et portes sont alimentées par le bus de données 221 et par des connexions 226 de chargement de l'octet MOTIF, 227 de chargement de l'octet DIME, 227' de chargement de l'octet DIML, 228 et 228' sont respectivement les validations des deux éléments binaires de poids fort de E et de L, c'est-à-dire des sorties de 262 et 263 pour 228 et des sorties de 267 et 268 pour 228'.

Les différentes sorties du circuit des figures 19a et 19b délivrent les signaux suivants:

— sortie de 234: MOTIF=0 mode normal
  =1 mode motif
— sortie de 233: TRANSP=0 fond uniforme
  =1 fond transparent
— sorties de 230: $V_F$=3 bits valeur V arbitraire
  231, 232
— sortie de 242: ΔX32=0 ΔX=8
  =1 ΔX=32
— sortie de 243: ΔY32=0 ΔY=8
  =1 ΔY=32
— sortie de 237: offX4=0 $off_x$=0
  =1 $off_x$=4
— sortie de 238: offY4=0 $off_y$=0
  =1 $off_y$=4

— sortie de 239: ΔH2=0 $\Delta H = \dfrac{\Delta X}{4}$

=1 $\Delta H = \dfrac{\Delta X}{2}$

— sortie de 239: ΔV2=0 $\Delta V = \dfrac{\Delta Y}{4}$

=1 $\Delta V = \dfrac{\Delta Y}{2}$

15

**0 108 674**

—sortie de 244: ΔH0 0 ΔH≠0, ΔH2 est valide,
=1 ΔH=0, ΔH2 est sans signification
—sortie de 245: ΔV0=0 ΔV≠0, ΔV2 est valide,
=1 ΔV=0, ΔV2 est sans signification.
—sorties de 251: Vp=3 bits:valeur V du motif point ou valeur VS1 des motifs-squelette,
252, 253
—sorties de 254: N° motif, 3 bits,:pour motif-squelette et motif-vrai (dans ce dernier cas, le bit de poids fort est seul utile).
255, 256
—sortie de 257: MOTIF-SQ=1 motif de type squelette
—sortie de 258: MOTIF-VR=1 motif de type vrai
—sorties de 259 260, 261, 270, et 271: E, 5 bits, longueur du motif moins 1, modulo ΔX,
—sorties de 264, 265, 266, 272, et 273: L, 5 bits, hauteur du motif moins 1, modulo ΔY.

On notera que ΔHO+ΔV0=1 et que si les signaux MOTIF-SQ (SQ: abréviation de "squelette") et MOTIF-VR (VR: abréviation de "vrai") sont tous deux nuls, alors on a affaire à un motif-point.

Les figures 20a à 20d illustrent un mode particulier de réalisation du circuit 54 de calcul de α et β. Réalisé en logique combinatoire, ce circuit effectue les calculs correspondant aux relations (1), (2) et (3) et (1'), (2') et (3') données plus haut, à partir des valeurs x et y fournies par le circuit 42 selon le maillage défini par le circuit 53 à l'aide de ΔX, ΔY, ΔH, ΔV, off$_x$ et off$_y$.

Le circuit de la figure 20a comprend deux additionneurs 280, 282, par exemple du type 74283, recevant offX4 (venant de 237, figure 19a) et x et deux additionneurs 284, 286 recevant offY4 (venant de 238, figure 19a) et y. Il délivre x+off$_x$ et y+off$_y$.

Le circuit de la figure 20b comprend un premier ensemble de quatre multiplexeurs 290 à 293 et un second ensemble analogue de quatre autres multiplexeurs 295 à 298 (représenté schématiquement en haut à droite). Tous ces circuits sont par exemple de type 74S151. Ils comprennent trois entrées de commands $S_0$, $S_1$ et $S_2$. Le premier ensemble de multiplexeurs reçoit x+off$_x$ provenant des circuits 280 et 282 de la figure 20a ainsi que ΔX32, ΔY32, ΔV2, ΔV0 provenant des portes 242, 243 de la bascule 239 et de la porte 245 du circuit 53 (figure 19a). Le second ensemble reçoit de manière analogue y+off$_y$ et ΔY32, ΔX32, ΔH2, ΔH0.

Les deux circuits de la figure 20b délivrent respectivement des signaux $\overline{KX}$ et $\overline{KY}$ avec

$$KX=\frac{x+offx}{\Delta X}$$

et

$$KY=\frac{y+offy}{\Delta Y}$$

Le circuit de la figure 20c comprend trois additionneurs 300, 302, 304 par exemple de type 74283, qui reçoivent $\overline{KX}$ et $\overline{KY}$ provenant des circuits de la figures 20b, ainsi que x+off$_x$ et y+off$_y$ venant des circuits de la figure 20a. La circuit de la figure 20c comprend encore deux circuits 306 et 308, de type 74157, servant à effectuer l'opération modulo (ΔX ou ΔY) et recevant ΔX32 et ΔY32 venant du circuit 53 (figure 19a). L'ensemble délivre les coordonnées α et β sur les sorties 54s$_1$, qui sont appliquées au circuit 55.

Enfin, le circuit illustré sur la figure 20d comprend deux comparateurs 310 et 312 de type 9324, recevant α et E pour le premier et β et L pour le second. Une porte NON-OU 311, de type 74S02, délivre le signal DANS.

Comme indiqué plus haut à propos de l'intérêt qu'il y a à choisir des paramètres de motif qui sont des puissances de 2, les divisions par ΔX ou ΔY suivies des produits par ΔH ou ΔV destinées à calculer les quantités

$$\frac{x+offx}{\Delta X}$$

ΔV ou

$$\frac{y+offy}{\Delta Y}$$

ΔH sont réalisées, dans les circuits des figures 20a à 20d par des décalages statiques. Les différentes

16

combinaisons ($\Delta X$, $\Delta V$) et ($\Delta Y$, $\Delta H$) sont traitées par les multiplexeurs 290 à 293 de la figure 20b, qui sont du type 8→1, et dont les signaux de commande sont ($\Delta X32$, $\Delta V2$, $\Delta Y32$) et ($\Delta Y32$, $\Delta H2$, $\Delta X32$). Le tableau VI ci-après donne selon les signaux appliqués aux entrées $S_2$, $S_1$, $S_0$ des multiplexeurs les bits délivrés pour les quantités en question.

TABLEAU VI

| $S_2$:$\Delta X32$ /$\Delta Y32$ | $S_1$:$\Delta Y32$ /$\Delta X32$ | $S_0$:$\Delta V2$ /$\Delta H2$ | $\dfrac{x+off_x}{\Delta x} . \Delta V$ | | | $\dfrac{y+off_y}{\Delta Y} . \Delta H$ | |
|---|---|---|---|---|---|---|---|
| 0 | 0 | 0 | b6 | b5 | b4 | b3 | 0 |
| 0 | 0 | 1 | b5 | b4 | b3 | 0 | 0 |
| 0 | 1 | 0 | b4 | b3 | 0 | 0 | 0 |
| 0 | 1 | 1 | b3 | 0 | 0 | 0 | 0 |
| 1 | 0 | 0 | b8 | b7 | b6 | b5 | 0 |
| 1 | 0 | 1 | b7 | b6 | b5 | 0 | 0 |
| 1 | 1 | 0 | b6 | b5 | 0 | 0 | 0 |
| 1 | 1 | 1 | b5 | 0 | 0 | 0 | 0 |

Les signaux $\Delta H_0$ et $\Delta V_0$ correspondent au cas où $\Delta H=0$ et $\Delta H=0$. Ces signaux sont appliqués sur les entrées E des multiplexeurs et forcent leurs sorties à 1.

La soustraction de

$$\frac{x+offx}{\Delta X} . \Delta V$$

à $y+off_y$ (relation 1') est réalisée par l'addition du complément à 2 de cette valeur, de même pour la soustraction de

$$\frac{y+offy}{\Delta Y} . \Delta H$$

de $x+off_x$ (relation 1). Seuls les 5 bits de poids faible sont traités puisque les éléments binaires supérieurs seront tronqués par la fonction modulo située en aval. Cette fonction modulo $\Delta X$ ou modulo $\Delta Y$ consiste à ne conserver que les trois bits de poids faible du résultat si $\Delta X$ (ou $\Delta Y$) est égal à 8, ou les 5 bits de poids faible si $\Delta X$ (ou $\Delta Y$) est égal à 32.

Un mode particulier de réalisation du circuit 55 de "mémoire de motif" est représenté sur la figure 21. Il comprend une mémoire morte 320, par exemple de type 6301, trois multiplexeurs 322, 324 et 326, trois portes logiques ET 321, 323 et 325, par exemple de type 74S08.

Le circuit 55 reçoit le signal Vp venant du circuit 53, les coordonnées α et β venant du circuit 54, le numéro de motif sur l'entrée $55e_3$ et les signaux MOTIF-VR et MOTIF-SQ venant de 53. Il délivre la valeur $V_M$ associée au point α, β pour le motif considéré.

Dans le cas de l'utilisation d'un motif-point, le signal Vp, fourni par le circuit de paramétrage 53, est envoyé directement sur les entrées $I_0$ des multiplexeurs de sortie 324 et 326.

Dans le cas d'un motif-squelette, les multiplexeurs 324 et 326 reçoivent sur les entrées $I_1$ la valeur Vp validée par l'élément d'adresse (α, β) à travers les portes ET.

Dans le cas d'un motif-vrai, la valeur de l'élément à écrire est envoyée sur les entrées $I_2$ et $I_3$ des multiplexeurs 324 et 326 finaux.

Les huit motifs-squelette et les deux motifs-vrais sont mémorisés dans la mémoire 320 avec des adresses $A_0$ à $A_7$ conformes au tableau VII suivant:

TABLEAU VII

| $A_7$ | $A_6$ | $A_5$ | $A_4$ | $A_3$ | $A_2$ | $A_1$ | $A_0$ | |
|---|---|---|---|---|---|---|---|---|
| 0 | 0 | | β | | | α | | motifs-sque-lette 0 à 3 |
| 0 | 1 | | β | | | α | | motifs-sque-lette 4 à 7 |
| 1 | 0 | | β | | | α | | motif-vrai 0 |
| 1 | 1 | | β | | | α | | motif-vrai 1 |

En ce qui concerne le numéro du motif, appliqué sur l'entrée $55e_3$ et codé sur trois bits ($b_0$, $b_1$, $b_2$) (cf. figure 16b) le bit $b_2$ est appliqué sur l'entrée $A_6$ de la mémoire 320 et les bits $b_0$ et $b_1$ sur les entrées $S_0$, $S_1$ du multiplexeur 322 qui est du type 4→1.

Pour les motifs-squelette, l'élément binaire $b_2$ appliqué à l'entrée A6 de 320 sélectionne un groupe parmi deux, de quatre motifs-squelette: motifs-squelette 0, 1, 2, 3 ou motifs-squelette 4, 5, 6, 7. La correspondance entre les motifs et les sorties $O_0$, $O_1$, $O_2$ et $O_3$ de la mémoire 320 est indiqué dans le tableau VIII ciaprès.

TABLEAU VIII

| $b_2$ | $O_1$ | $O_2$ | $O_1$ | $O_0$ |
|---|---|---|---|---|
| =0 | motif 3 | motif 2 | motif 1 | motif 0 |
| =1 | motif 7 | motif 6 | motif 5 | motif 4 |

L'un des quatre motifs dans un groupe est définitivement sélectionné par le multiplexeur 322 commandé par les bits $b_0$ et $b_1$.

Pour les motifs-vrais, l'entrée $A_7$ de la mémoire est utilisée et ses trois sorties, $O_0$ (pour le bleu), $O_1$ (pour le vert) et $O_2$ (pour le rouge) sont seules prises en compte, $O_3$ étant ignoré.

Un mode particulier de réalisation du circuit 56 de "sélection de la configuration" est illustré sur la figure 22. Il comprend un multiplexeur 330, par exemple de type 74S175, recevant $V_F$ et $V_M$, quatre bascules 340 à 343, de type 74S175, des inverseurs 331, 332, 334, 335, de type 74S04, une porte ET 333 de type 74S08, une porte NON-ET 336 de type 74S10, une porte NON-ET 337 de type 74S00, et trois portes NON-ET de sortie 346, 347, 348 de type 74S00.

Ce circuit sélectionne la valeur finale V et bloque l'écriture en mémoire d'image conformément au tableau I déjà évoqué.

De façon plus précise, le multiplexeur 330, recevant $V_F$ et $V_M$ venant respectivement des circuits de paramétrage 53 et de mémoire de motifs 55, est commandé par le signal de commande DANS-ET-MOTIF qui valide $V_M$. La valeur sélectionnée est alors mémorisée par le signal complément de $\overline{HRAS}$* dans les bascules 340, 341, 342; la sortie de ces bascules étant validée par le complément de $\overline{DIN}$* grâce aux portes 346, 347, 348. Les trois signaux $\overline{DIN_0}$, $\overline{DIN_1}$, et $\overline{DIN_2}$ de sortie sont envoyés vers les entrées de validation $14V_1$, $14V_2$, $14V_3$ des trois plans de la mémoire d'image.

La deuxième partie du circuit 56 élabore un signal d'écriture $\overline{DW_M}$ à destination de la mémoire d'image, selon la relation logique:

$$\overline{DW_M} = \overline{DW}* + (MOTIF . \overline{DANS} . TRANSP)$$

Ce signal d'écriture est mémorisé dans la bascule 343 en même temps que la valeur V sélectionnée dans les bascules 340 à 342.

Les chronogrammes relatifs au mode de réalisation qui vient d'être décrit sont représentés sur les figures 23 et 24. Le chronogramme de la figure 23, tout d'abord, concerne les cycles de lecture et de rafraîchissement de la mémoire d'image. Lorsque le GDP déclenche un cycle de lecture de la mémoire d'image, pour le compte du générateur vidéo, ou un cycle de rafraîchissement des mémoires dynamiques, un tel cycle est transmis tel quel à la mémoire d'image avec un retard de 400 ns. Puisque celle-ci ne reçoit aucune demande d'écriture, elle ignore les trois signaux $\overline{DIN_0}$, $\overline{DIN_1}$, $\overline{DIN_2}$ qui, bien qu'engendrés par le système 30, sont sans signification (c'est le sens du pointillé des lignes $\overline{DIN}$ sur le chronogramme de la figure 23). Au décalage temporel près, le système 30, dans un tel cycle, est donc transparent.

Le chronogramme de la figure 24 est relatif au cycle d'écriture. Le cycle d'écriture d'un point en mémoire d'image, déclenché par le GDP, se caractérise par un chronogramme identique à celui d'un cycle de lecture et de rafraîchissement, si ce n'est que $\overline{DW}=0$, que $\overline{ALL}=1$ (accès à 1 bit) et que $\overline{DIN}$ est significatif (0 pour un tracé effectif, 1 pour un effacement).

Les coordonnées (x, y) du point courant sont données dans les trois blocs d'adresses $a_0$, $a_1$, $a_2$, échantillonnés par $\overline{HRAS}$ et $\overline{HCAS}$ pour qu'elles soient figées en sortie du circuit de mise en forme de x, y (42). Ainsi, les coordonnées (x, y) sont valides environ 17 ns après la descente de $\overline{HCAS}$. Les signaux $a$, $\beta$ sont disponibles environ 120 ns après et le signal logique DANS environ 150 ns après la disponibilité de (x, y).

L'obtention de $V_M$ à partir de $(a, \beta)$, en sortie du circuit 55 de mémoire de motif, est la plus longue à intervenir dans le cas d'un motif-squelette. Elle demande, dans ce cas, 90 ns. Ainsi, la mémorisation dans le circuit 56 de sélection du signal $\overline{DW}$ et des $\overline{DIN}_{0 \text{ à } 2}$ par le signal $\overline{HRSS}^*$ peut survenir 200 ns après la transition basse de $\overline{HCAS}$. Compte tenu du décalage des signaux $\overline{HRAS}$ et $\overline{HCAS}$, on peut considérer que 400 ns est une valeur acceptable du retard à imposer aux signaux du cycle mémoire, avant de les appliquer à la mémoire d'image.

Enfin, la figure 25 est un chronogramme illustrant le fonctionnement interne du système de l'invention et qui met en évidence la durée maximale d'exécution dans le cas de motifs-squelettes.

Le cycle d'écriture tel qu'il vient d'être décrit est relatif au traitement d'un point courant d'une texture donnée. Avant d'afficher une texture, on doit paramétrer par programme cette texture. Pour cela, le microordinateur du terminal charge les 5 octets de commande MODE, MAILLE, MOTIF, DIME et DIML, puis lance l'affichage des points impliqués dans cette texture.

## Revendications

1. Terminal graphique à mémoire d'image, comprennant:

— une mémoire d'image (14) constituée de N plane mémoire ($14_1...14_N$), N étant un entier au moins égal à 1, chaque plan comprenant un ensemble matriciel de points mémoire apte à mémoriser chacun un bit, chaque point étant défini par une adresse, les N bits de N points ayant même adresse dans les N plans définissant un mot (V) de N bits, cette mémoire possédant une entrée d'adressage (14Ad) commune aux N plans, une entrée de commande (14C) commune aux N plans, N entrées de validation ($14V_1...14V_N$) et possédant N sorties binaires ($14S_1...14S_N$),

— un séquenceur (20) possédant une sortie d'horloge ($20s_1$) et des sorties de commande ($20s_2$),

— un processeur d'affichage graphique (22) possédant une entrée (22e), un premier groupe de sorties ($22s_1$) associé aux sorties ($20s_2$) du séquenceur délivrant des signaux de commande (SC) définissant un cycle d'accès à la mémoire, un second groupe de sorties ($22s_2$) délivrant des signaux d'adresse (SAd), un troisième groupe de sorties ($22s_3$) délivrant des signaux d'horloge et de synchronisation,

— un générateur de signaux vidéo (16) possédant N entrées binaires ($16e_1...16e_N$) reliées aux N sorties binaires de la mémoire d'image (14), une entrée de synchronisation (16) reliée au troisième groupe de sortie ($22s_3$) du processeur d'affichage graphique (22) et une entrée d'horloge (16H) reliée à la sortie d'horloge ($20s_1$) du séquenceur (20) et possédant une sortie (16s) délivrant des signaux vidéo et de synchronisation,

— un récepteur vidéo d'affichage (18) relié au générateur de signaux vidéo (16),

— un microordinateur de gestion (10) possédant un premier groupe de sorties ($10s_1$) relié à l'entrée (22e) du processeur d'affichage graphique et un second groupe de sortie ($10s_2$),

ce terminal étant caractérisé en ce qu'il comprend en outre un système (30) d'écriture en mémoire d'image de signaux de texture d'image, ce système comprenant:

A)— un circuit (40) de traitement du cycle d'accès à la mémoire d'image, ce circuit comprenant:

    $A_1$)— un circuit (41) de transmission avec retard des signaux de commande du cycle d'accès à la mémoire, ce circuit possédant une première entrée ($41e_1$) reliée aux sorties de commande ($20s_2$) du séquenceur (20) et au premier groupe de sorties ($22s_1$) du processeur d'affichage graphique (22) et recevant des signaux de commande (SC), une seconde entrée ($41e_2$) reliée au second groupe de sorties ($22s_2$) du processeur d'affichage graphique (22) et recevant des signaux d'adresse (SAd), une première sortie ($41s_1$) délivrant les signaux de commande retardés d'une durée fixe (SC*), et une seconde sortie ($41s_2$) délivrant des signaux d'adresse retardés de la même durée (SAd*), la première sortie ($41s_1$) étant reliée à l'entrée de commande (14C) de la mémoire d'image (14) et la seconde sortie ($41s_2$) à l'entrée d'adressage (14Ad) de cette mémoire d'image,

    $A_2$)— un circuit (42) de mise en forme, ce circuit possédant une entrée (42e) reliée au second groupe de sorties ($22s_2$) du processeur d'affichage graphique (22) d'où il reçoit des signaux d'adresses (SAd) et une sortie (42s) délivrant deux signaux (x, y) représentant des coordonnées dans les plans de la mémoire d'image du point ayant l'adresse appliquée à l'entrée (42e),

B)— un circuit (50) de .détermination du mot (V) à écrire en mémoire, comprenant:

B$_1$)— un circuit (53) de paramétrage de fonctionnement, ce circuit possédant une entrée (53e) reliée au second groupe (10s$_2$) de sorties du microordinateur (10) et recevant de ce microordinateur des signaux précisant des modalités de fonctionnement du système, et possédant une première sortie (53s$_1$) délivrant huit signaux, respectivement ΔX, ΔY, ΔH, ΔV, off$_x$, off$_y$, E, L, définissant un motif répétitif correspondant à une texture d'image particulière, une deuxième sortie (53s$_2$) délivrant des signaux (CHOIX) sélectionnant le motif à utiliser dans la texture à afficher, une troisième sortie (53s$_3$) délivrant des signaux (V$_F$, Modes) définissant un mode de fonctionnement parmi plusieurs (avec ou sans motif, fond uniforme ou transparent),

B$_2$)— un circuit de calcul (54) possédant une première entrée (54e$_1$) reliée à la sortie (42s) du circuit (42) de mise en forme et recevant les signaux x, y et une seconde entrée (54e$_2$) reliée à la première sortie (53s$_1$) du circuit de paramétrage (53) et recevant les huit signaux que délivre cette sortie, et possédant une première et une seconde sorties (54s$_1$, 54s$_2$), ce circuit de calcul (54) étant apte:

. à calculer deux coordonnées α\* et β\* à partir des adresses x, y et des signaux ΔX, ΔY, ΔH, ΔV, off$_x$, off$_y$ par les relations suivantes:

$$\alpha^* = (x + off_x)\frac{(y + off_y)}{\Delta Y} \Delta H \qquad (1)$$

$$\beta^* = (y + off_y) - \frac{(x + off_x)}{\Delta X} \Delta V \qquad (1')$$

. à déterminer si α\* est positif ou nul, auquel cas le circuit calcule une coordonnée relative α égale à α\* modulo ΔX, sinon le circuit calcule α par:

$$[\Delta X - (|\alpha^*| \text{ modulo } \Delta X)] \text{modulo } \Delta X,$$

où $|\alpha^*|$ représente la valeur absolue de α\*,

. à déterminer si β\* est positif ou nul auquel cas le circuit calcule une coordonnée β égale à β\* modulo ΔY, sinon le circuit calcule une coordonnée relative β par:

$$[\Delta Y - (|\beta^*| \text{ modulo } \Delta Y)] \text{modulo } \Delta Y$$

où $|\beta^*|$ représente la valeur absolue de β\*,

. à délivrer sur sa première sortie (54s$_1$) les coordonnées α et β,

. à déterminer si la coordonnée α est inférieure à E et si, en même temps, la coordonnée β est inférieure à L,

. à délivrer sur sa seconde sortie (54s$_2$) un signal (DANS) déterminant si la condition précédente est ou n'est pas satisfaite,

B$_3$)— un circuit de mémoire de motifs (55), constitué de mémoires contenant des informations définissant différents types de motifs et, pour chaque type, plusieurs motifs, ce circuit comprenant une entrée de commande (55e$_1$) reliée à la première sortie (54s$_1$) du circuit de calcul (54) et recevant les coordonnées relatives α, β, une seconde entrée de sélection (55e$_2$) reliée à la seconde sortie (53s$_2$) du circuit de paramétrage de fonctionnement (53), cette entrée (55e$_2$) recevant des signaux (CHOIX) de sélection d'un motif parmi plusieurs, une troisième entrée (55e$_3$) reliée à la sortie (10s$_2$) de l'ordinateur (10) et recevant des signaux de chargement du motif, et une sortie (55s) délivrant un signal (V$_M$) susceptible d'être écrit dans la mémoire d'image pour le motif choisi,

B$_4$)— un circuit de sélection de configuration (56), ce circuit possédant une première entrée (56e$_1$) reliée à la troisième sortie (53s$_3$) du circuit de paramétrage de fonctionnement (53) et recevant des signaux (V$_F$, Modes) déterminant un mode de fonctionnement, une deuxième entrée (56e$_2$) reliée à la sortie (55s) du circuit de mémoire de motif (55) et recevant le signal (V$_M$), une troisième entrée (56e$_3$) reliée à la seconde sortie (54s$_2$) du circuit de calcul (54) et recevant le signal (DANS), une quatrième entrée (56e$_4$) reliée à la première sortie (41s$_1$) du circuit de transmission de cycle mémoire (41) de recevant le signal de commande retardé (SC\*), ce circuit (56) étant apte, en fonction du signal (DANS) et du signal déterminant le mode de fonctionnement, à valider le cycle de commande (SC\*) et à déterminer, en fonction du signal V$_M$ le mot à N bits (V) à écrire en mémoire d'image, ce circuit possédant un premier groupe de sorties (56s$_1$) reliées à l'entrée de commande (14C) de la mémoire d'image et délivrant des signaux de commande d'écriture dans la mémoire, et un second groupe de sorties (56s$_2$) reliées aux N entrées de validation (14V$_1$...14V$_N$) de la mémoire d'image et délivrant le mot (V) à écrire dans la mémoire d'image.

2. Terminal graphique selon la revendication 1, caractérisé en ce que le circuit de mémoire de motifs (55) comprend l'un au moins des trois circuits (101, 111, 131) suivants:

— un circuit mémoire de motifs-point (101) comprenant une pluralité de n mémoires ($100_1...100_n$), n étant un entier au moins égal à 1, chaque mémoire possédant une entrée reliée à la seconde sortie ($10s_2$) de l'ordinateur (10) et étant apte à mémoriser un signal ($Vp_1...Vp_n$) et un multiplexeur (102) possédant n entrées ($102e_1...102e_n$) reliées chacune à l'une des n mémoires ($100_1...100_n$), une entrée de commande (102C) et une sortie (102s) délivrant un signal (Vp),

— un circuit mémoire de motifs-squelette (111), comprenant une mémoire (110) formée de plusieurs plans-mémoire, chaque plan ayant une entrée de validation (112), une entrée de chargement (113) reliée à la seconde sortie ($10s_2$) de l'ordinateur (10) et une entrée d'adressage (114) reliée à la sortie ($54s_1$) du circuit (54) et une sortie commune (116), une pluralité de n' mémoires ($120_1...120_{n'}$), n' étant un entier au moins égal à 1, contenant chacune un mot particulier ($V_{S1}...VS_{n'}$), un multiplexeur (122) à n' entrées ($122e_1...122e_{n'}$), ces entrées étant reliées chacune à l'une des mémoires ($120_1...120_{n'}$), à une entrée de commande (122C) reliée à la sortie (116) de la mémoire (110) et à une sortie (122s) délivrant un mot ($V_S$) caractérisant le motif-squelette sélectionné,

— un circuit mémoire de motifs-vrais (131) comprenant une mémoire (130) formée de plans constitués chacun d'une matrice de points-mémoire, chaque plan de cette mémoire (130) ayant une entrée de validation (132), une entrée de chargement (133) reliée au second groupe de sortie ($10s_2$) de l'ordinateur (10), une entrée d'adressage (134) reliée à la sortie ($54s_1$) du circuit de calcul (54) et une sortie unique (136) délivrant un signal (Vv) propre au motif sélectionné,

le circuit mémoire de motifs comprenant en outre:

— un circuit logique de sélection (138) possédant une entrée (138e) reliée à la deuxième sortie ($53s_2$) du circuit du paramétrage de fonctionnement (53) et recevant un signal (CHAIX) determinant le choix d'un motif, une première sortie ($138s_1$) délivrant un signal déterminant un motif, cette sortie étant reliée à l'entrée de commande (102C) du multiplexeur (102) du circuit mémoire de motifs-point (101) ainsi qu'à l'entrée (112) de validation d'un des plans-mémoire de la mémoire (110) du circuit mémoire de motifs-squelette (111) ainsi encore qu'à l'entrée (132) de validation d'un des plans-mémoire de la mémoire (130) du circuit mémoire de motifs-vrais (131), et possédant une seconde sortie ($138s_2$) délivrant un signal déterminant le type de motif sélectionné (motif-point, motif-squelette, motif-vrai),

— un multiplexeur (140) possédant autant d'entrées ($140e_1$, $140e_2$, $140e_3$) que de circuits mémoire de motifs (101, 111, 131), ces entrées étant reliées aux sorties de ces circuits mémoire de motifs, une entrée de commande (140C) reliée à la seconde sortie ($138s_2$) du circuit logique de sélection (138) et à une sortie (140s) délivrant un mot ($V_M$) sélectionné et constituant la sortie (55s) du circuit global de mémoire de motif, cette sortie étant reliée à la deuxième entrée ($56e_2$) du circuit de sélection (56).

3. Terminal graphique selon la revendication 1, caractérisé en ce que le circuit de calcul (54) utilisant une arithmétique binaire en complément à 2, fournit directement les coordonnées α et β, quel que soit le signe de α* et de β*, en appliquant à la représentation en complément à 2 des valeurs de α* et β* les équations suivantes:

$$\alpha = \alpha^* \text{ Modulo } \Delta X;$$
$$\beta = \beta^* \text{ modulo } \Delta Y,$$

ΔX et ΔY étant des puissances de 2.

**Patentansprüche**

1. Grafisches Terminal mit Bildspeicher mit:

— einem Bildspeicher, der von N Speicherebenen ($14_1...14_N$) gebildet ist, wobei N eine ganze Zahl von wenigstens gleich 1 ist und jede Ebene eine Matrixgesamtheit von Punktspeichern aufweist, von denen jeder ein Bit speichern kann und jeder Punkt durch eine Adresse definiert ist, wobei die N Bit von N Punkten, die dieselbe Adresse in den N Ebenen besitzen, ein Wort V von N Bits definieren, und dieser Speicher einen, den N Ebenen gemeinsamen Adresseneingang (14Ad), ein den N Ebenen gemeinsamen Steuereingang (14C), N Gültigmachungseingänge ($14V_1...14V_N$) und N binäre Ausgänge ($14S_1...14S_N$) aufweist,

— einem Folgeschalter (20), der einen Taktausgang ($20s_1$) und Steuerausgänge ($20s_2$) aufweist,

— einem grafischen Anzeigeprozessor (22), der einen Eingang (22e), eine erste Gruppe von Ausgängen ($22s_1$), die mit den Ausgängen ($20s_2$) des Folgeschalters verbunden sind, die Steuersignale (SC) abgeben, welche einen Zugriffszyklus zu dem Speicher definieren, eine zweite Gruppe von Ausgängen ($22s_2$), die Adressensignale (SAg) abgeben, und eine dritte Gruppe von Ausgängen ($22s_3$) aufweist, die Taktsignale und Synchronisationssignale abgeben,

— einem Videosignalgenerator (16), der N binäre Eingänge ($16e_1...16e_N$), die mit den N Binärausgängen des Bildspeichers (14) verbunden sind, einen Synchronisationseingang (16), der mit der dritten Gruppe von Ausgängen ($22s_3$) des grafischen Anzeigeprozessors (22) verbunden sind, einen Takteingang (16H),

21

der mit dem Taktausgang (20s$_1$) des Folgeschalters (20) verbunden ist, und einen Ausgang (16s) aufweist, der Video- und Synchronisationssignale abgibt,

— einem Videoanzeigeempfänger (18), der mit dem Videosignalgenerator (16) verbunden ist,

— einem Mikrorechner zur Verwaltung (10), der eine erste Gruppe von Ausgängen (10s$_1$), die mit dem Eingang (22e) des grafischen Anzeigeprozessors verbunden sind, und eine zweite Gruppe von Ausgängen (10s$_2$) aufweist,

wobei dieses Terminal dadurch gekennzeichnet ist, daß es ferner ein System (30) zum Einschreiben von Bildstruktursignalen in den Bildspeicher aufweist und dieses System umfaßt:

A)— einen Verarbeitungsschaltkreis (40) für den Zugriffszyklus zu dem Bildspeicher, wobei dieser Schaltkreis aufweist:

A$_1$)— einen Schaltkreis (41) zur Übertragung mit Verzögerung der Steuersignale des Zugriffszyklus zu dem Speicher, wobei dieser Schaltkreis einen ersten Eingang (41e$_1$), der mit den Steuerausgängen (20s$_2$) des Folgeschalters (20) und der ersten Gruppe von Ausgängen (22s$_1$) des grafischen Anzeigeprozessors (22) verbunden ist und Steuersignale (SC) erhält, einen zweiten Eingang (41e$_2$), der mit der zweiten Gruppe von Ausgängen (22s$_2$) des grafischen Anzeigeprozessors (22) verbunden ist und Adressensignale (SAd) erhält, einen ersten Ausgang (41s$_1$), der mit einer festen Dauer verzögerte Steuersignale (SC*) abgibt, und einen zweiten Ausgang (41s$_2$) aufweist, der mit der gleichen Dauer verzögerte Adressensignale (SAd*) abgibt, wobei der erste Ausgang (41s$_1$) mit dem Steuereingang (146) des Bildspeichers (14) und der zweite Ausgang (41s$_2$) mit dem Adresseneingang (14Ad) dieses Bildspeichers verbunden ist,

A$_2$)— einen Formungsschaltkreis (42), wobei dieser Schaltkreis einen Eingang (42e), der mit der zweiten Gruppe von Ausgängen (22s$_2$) des grafischen Anzeigeprozessors (22) verbunden ist, von dem er Adressensignale (SAd) erhält, und einen Ausgang (42s) aufweist, der zwei Signale (x, y) abgibt, die die Koordinaten in den Ebenen des Bildspeichers des Punktes darstellen, der die an den Eingang (42e) gegebene Adresse aufweist,

B)— einen Bestimmungsschaltkreis (50) für das in den Speicher einzuschreibende Wort (V), der umfaßt:

B$_1$)— einen Betriebsparametrisierungsschaltkreis (53), der einen Eingang (53e), der mit der zweiten Gruppe von Ausgängen (10s$_2$) des Mikrorechners (10) verbunden ist und von diesem Mikrorechner Signale erhält, die die Betriebsmodalitäten des Systems festlegen, und einen ersten Ausgang (53s$_1$), der acht Signale ΔX, ΔY, ΔH, ΔV, off$_x$, off$_y$, E bzw. L abgibt, die ein einer besonderen Bildstruktur entsprechendes Wiederholgungsmuster definieren, einen zweiten Ausgang (53s$_2$), der das bei der anzuzeigenden Struktur zu verwendende Muster auswählende Signale (CHOIX) abgibt, und einen dritten Ausgang (53s$_3$) aufweist, der Signale (V$_F$, Modes) abgibt, die eine von mehreren Betriebsarten (mit oder ohne Muster, gleichförmiger oder transparenter Hintergrund) definieren,

B$_2$)— einen Rechenschaltkreis (54), der einen ersten Eingang (54e$_1$), der mit dem Ausgang (42s) des Formungsschaltkreises (42) verbunden ist und die Signale x, y erhält, einen zweiten Eingang (54e$_2$), der mit dem ersten Ausgang (53s$_1$) des Parametriesierungsschaltkreises (53) verbunden ist und die von diesem Ausgang abgegebenen 8 Signale erhält, und einen ersten und einen zweiten Ausgang (54s$_1$, 54s$_2$) aufweist, wobei dieser Rechenschaltkreis (54) vermag:

. zwei Koordinaten α* und β* ausgehend von den Adressen x, y und den Signalen ΔX, ΔY, ΔH, ΔV, off$_x$, off$_y$ mittels der folgenden Beziehungen zu berechnen:

$$\alpha^* = (x+off_x)\frac{(y+off_y)}{\Delta Y}\Delta H \qquad (1)$$

$$\beta^* = (y+off_y)\frac{(x+off_x)}{\Delta X}\Delta V \qquad (1')$$

. festzustellen, ob α* positiv oder Null ist, wobei der Schaltkreis in diesem Fall eine Koordinate in Bezug auf α gleich α* Modulo ΔX berechnet, und wenn dies nicht zutrifft, der Schaltkreis α berechnet durch:

$$[\Delta X - (|\alpha^*| \text{ Modulo } \Delta X)] \text{ Modulo } \Delta X,$$

wobei |α*| den absoluten Wert von α* darstellt,

. zu bestimmen, ob β* positiv oder Null ist, wobei in diesem Fall der Schaltkreis eine Koordinate β gleich β* Modulo ΔY bereichnet, und wenn dies nicht der Fall ist, der Schaltkreis eine Koordinate in Bezug auf β berechnet durch:

# 0 108 674

$$[\Delta Y-(\mid \beta^* \mid \text{Modulo } \Delta Y)]\text{Modulo } \Delta Y$$

wobei $\mid \beta^* \mid$ den absoluten Wert von $\beta^*$ darstellt,

. an seinem ersten Ausgang ($54s_1$) die Koordinaten $\alpha$ und $\beta$ abzugeben,

. zu bestimmen, ob die Koordinate $\alpha$ kleiner als E und ob gleichzeitig die Koordinate $\beta$ kleiner als L ist,

. an seinem zweiten Ausgang ($54s_2$) ein Signal (DANS) abzugeben, welches angibt, ob die vorhergehende Bedingung erfüllt ist oder nicht,

$B_3$)— einen Musterspeicherschaltkreis (55), der von Speichern gebildet ist, die Informationen enthalten, welche verschiedene Musterarten und für jede Art mehrere Muster definieren, wobei dieser Schaltkreis einen Steuereingang ($55e_1$), der mit dem ersten Ausgang ($54s_1$) des Rechenschaltkreises (54) verbunden ist und die Koordinaten in Bezug auf $\alpha$, $\beta$ erhält, einen zweiten Auswahleingang ($55e_2$), der mit dem zweiten Ausgang ($53s_2$) des Betriebsparametrisierungsschaltkreises (53) verbunden ist, wobei dieser Eingang ($55e_2$) Auswahlsignale (CHOIX) für eines von mehreren Motiven erhält, einen dritten Eingang ($55e_3$), der mit dem Ausgang ($10s_2$) des Rechners (10) verbunden ist und Musteränderungssignale erhält, une einen Ausgang (55s) aufweist, der ein Signal ($V_M$) abgibt, welches in den Bildspeicher für das gewählte Muster eingeschrieben werden kann,

$B_4$)— einen Konfigurationsauswahlschaltkreis (56), der einen ersten Eingang ($56e_1$), der mit dem dritten Ausgang ($53s_3$) des Betriebsparametriesierungsschaltkreises (53) verbunden ist und Signale ($V_F$, Modes) erhält, die eine Betriebsart festlegen, einen zweiten Eingang ($56e_2$), der mit dem Ausgang (55s) des Musterspeicherschaltkreises (55) verbunden ist und das Signal ($V_M$) erhält, einen dritten Eingang ($56e_3$), der mit dem zweiten Ausgang ($54s_2$) des Rechenschaltkreises (54) verbunden ist und das Signal (DANS) erhält, und einen vierten Eingang ($56e_4$) aufweist, der mit dem ersten Ausgang ($41s_1$) des Speicherzyklusübertragungsschaltkreises (41) verbunden ist und das verzögerte Steuersignal (SC*) erhält, wobei dieser Schaltkreis (56) in Abhängigkeit von dem Signal (DANS) und dem die Betriebsart festlegenden Signal den Steuerzyklus (SC*) gültigmachen kann und in Abhängigkeit von dem Signal ($V_M$) das in den Bildspeicher einzuschreibende Wort mit N Bits (V) bestimmen kann und wobei dieser Schaltkreis eine erste Gruppe von Ausgängen ($56s_1$), die mit dem Steuereingang (14C) des Bildspeichers verbunden sind und Steuersignale zum Einschreiben in den Speicher abgeben, und eine zweite Gruppe von Ausgängen ($56s_2$) aufweist, die mit den N Eingängen zur Gültigmachung ($14V_1...14V_N$) des Bildspeichers verbunden sind und das in den Bildspeicher einzuschreibende Wort (V) liefern.

2. Grafisches Terminal nach Anspruch 1, dadurch gekennzeichnet, daß der Musterspeicherschaltkreis (55) wenigstens einen der drei folgenden Schaltkreisen (101, 111, 131) enthält:

— einen Musterpunktspeicherschaltkreis (101), der eine Vielzahl von n Speichern ($100_1...100_n$) mit n einer ganzen Zahl von mindestens 1, wobei jeder Speicher einen mit dem zweiten Ausgang ($10s_2$) des Rechners (10) verbundenen Eingang besitzt und ein Signal ($Vp_1...,Vp_n$) speichern kann, und einen Multiplexer (102) aufweist, der n Eingänge ($102e_1...,102e_n$), von denen jeder mit einem der n Speicher ($100_1...,100_n$) verbunden ist, einen Steuereingang (102C) und einen ein Signal (Vp) abgebenden Ausgang (102s) aufweist,

— einen Mustergrundcodespeicherschaltkreis (111), der einen von mehreren Speicherebenen gebildeten Speicher (110), wobei jede Ebene einen Gültigmachungseingang (112), einen mit dem zweiten Ausgang ($10s_2$) des Rechners (10) verbundenen Ladeeingang (113) und einen mit dem Ausgang ($54s_1$) des Schaltkreises (54) verbundenen Adresseneingang (114) sowie einen gemeinsamen Ausgang (116) aufweist, eine Vielzahl von n' Speichern ($120_1...120_{n'}$) mit n' einer ganzen Zahl von wenigstens gleich 1, von denen jeder ein besonderes Wort ($V_{s1}...,V_{sn'}$) enthält, sowie einen Multiplexer (122) mit n' Eingängen ($122e_1...,122e_{n'}$), wobei diese Eingänge jeweils mit einem der Speicher ($120_1...,120_{n'}$) verbunden sind, mit einem mit dem Ausgang (116) des Speichers (110) verbundenen Steuereingang (122C) und mit einem Ausgang (122s) umfaßt, der ein den ausgewählten Mustergrundcode kennzeichnendes Wort ($V_S$) abgibt,

— einen Speicherschaltkreis für die wahren Muster (131), mit einem Speicher (130), der von Ebenen gebildet ist, von denen jede als eine Punktspeichermatrix ausgebildet ist, wobei jede Ebene dieses Speichers (130) einen Gültigmachungseingang (132), einen mit der zweiten Gruppe von Ausgängen ($10s_2$) des Rechners (10) verbundenen Ladeeingang (133), einen Adresseneingang (134), der mit dem Ausgang ($54s_1$) des Rechenschaltkreises (54) verbunden ist, und einen einzigen Ausgang (136) aufweist, der ein dem ausgewählten Muster züeigenes Signal (Vv) abgibt,

wobei der Musterspeicherschaltkreis ferner aufweist:

— einen logischen Wählschaltkreis (138) mit einem Eingang (138e), der mit dem zweiten Ausgang ($53s_2$) des Betriebsparametriesierungsschaltkreises (53) verbunden ist und ein die Wahl eines Musters bestimmendes Signal (CHOIX) erhält, einem ersten Ausgang ($138s_1$), der ein ein Muster bestimmendes Signal abgibt, wobei dieser Ausgang mit dem Steuereingang (102C) des Multiplexers (102) des Musterpunktspeicherschaltkreises (101) sowie mit dem Gültigmachungseingang (112) einer der Speicherebenen des Mustergrundcodespeicherschaltkreises (111) sowie ferner mit dem Gültigmachungseingang (132) einer der Speicherebenen des Speichers (130) des Speicherschaltkreises für die wahren Muster (131) verbunden ist sowie mit einem zweiten Ausgang ($138s_2$), der ein die Art des ausgewählten Musters (Punktmuster, Grundcodemuster, wahres Muster) bestimmendes Signal abgibt,

— einen Multiplexer (140) mit so vielen Eingängen ($140e_1$, $140e_2$, $140e_3$) wie Musterspeicherschaltkreise (101, 111, 131), wobei diese Eingänge mit den Ausgängen dieser Musterspeicherschaltkreise verbunden sind, einem Steuereingang (140C), der mit dem zweiten Ausgang ($138s_2$) des logischen Auswahlschaltkreises (138) und mit einem Ausgang (140s), verbunden ist, der ein ausgewähltes Wort ($V_M$) abgibt und den Ausgang (55s) des Gesamtschaltkreises des Musterspeichers bildet, wobei dieser Ausgang mit dem zweiten Eingang ($56e_2$) des Auswahlschaltkreises (56) verbunden ist.

3. Grafisches Terminal gemäß Anspruch 1, dadurch gekennzeichnet, daß der Rechenschaltkreis (54), der eine Binärarithmetik mit Zwei-Komplement besitzt, unmittelbar die Koordinaten α und β unabhängig von dem Vorzeichen von α* und β* liefert, indem zur Zwei-Komplement-Darstellung der WErte α* und β* die folgenden Gleichungen verwendet werden:

$$\alpha = \alpha^* \text{ Modulo } \Delta X$$
$$\beta = \beta^* \text{ Modulo } \Delta Y$$

wobei ΔX und ΔY Potenzen von 2 sind.

## Claims

1. Image memory graphic terminal comprising:

— an image memory (14) formed from N memory planes ($14_1...,14_N$), N being an integer at least equal to 1, each plane including a matrix configuration of memory points each capable of storing one bit, each point being defined by an address, the N bits of N points having the same address in the N planes defining a word (V) of N bits, this memory having an addressing input (14Ad) common to the N planes, a control input (14C) common to the N planes, N validation inputs ($14V_1...14V_N$) and having N binary outputs ($14S_1...14S_N$),

— a sequencer (20) having a clock output ($20s_1$) and control outputs ($20s_2$),

— a graphic display processor (22) having an input (22e), a first group of outputs ($22s_1$) associated with the outputs ($20s_2$) of the sequencer delivering control signals (SC) defining an access cycle of the memory, a second group of outputs ($22s_2$) delivering address signals (SAd), a third group of outputs ($22s_3$) delivering clock and synchronization signals,

— a video signals generator (16) having N binary inputs ($16e_1...16e_N$) connected to the N binary outputs of the image memory (14), a synchronization input (16) connected to the third group of outputs ($22s_3$) of the graphic display processor (22) and a clock input (16H) connected to the clock output ($20s_1$) of the sequencer (20) and having an output (16s) delivering video and synchronization signals,

— a video display receiver (18) connected to the video signals generator (16),

— a management microcomputer (10) having a first group of outputs ($10s_1$) connected to the input (22e) of the graphic display processor and a second group of outputs ($10s_2$),

this terminal being characterized in that it also includes a system (30) for writing image texture signals into the image memory, this system including:

A)— a circuit (40) for processing the image memory access cycle, this circuit including:

    $A_1$)— a circuit (41) for transmitting delayed memory access cycle control signals, this circuit having a first input ($41e_1$) connected to the control outputs ($20s_2$) of the sequencer (20) and to the first group of outputs ($22s_1$) of the graphic display processor (22) and receiving control signals (SC), a second input ($41e_2$) connected to the second group of outputs ($22s_2$) of the graphic display processor (22) and receiving adress signals (SAd), a first output ($41s_1$) delivering the control signals delayed by a fixed duration (SC*), and a second output ($41s_2$) delivering address signals delayed by the same duration (SAd*), the first output ($41s_1$) being connected to the control input (14C) of the image memory (14) and the second output ($41s_2$) to the addressing input (14Ad) of this image memory,

    $A_2$)— a shaping circuit (42), this circuit having an input (42e) connected to the second group of outputs ($22s_2$) of the graphic display processor (22) from where it receives address signals (SAd) and an output (42s) delivering two signals (x, y) representing coordinates in the image memory planes of the point having the address applied to the input (42e),

B)— a circuit (50) determining the word (V) to be written into memory, including:

B₁)— a circuit providing functional parameters (53), this circuit having an input (53e) connected to the second group (10s₂) of outputs of the microcomputer (10) and receiving from this microcomputer signals specifying the operating procedures of the system, and having a first input (53s₁) delivering eight signals, ΔX, ΔY, ΔH, ΔV, off$_x$, off$_y$, E and L, defining a repetitive pattern corresponding with a particular image texture, a second output (53s₂) delivering signals (CHOICE) selecting the pattern to be used in the texture to be displayed, a third output (53s₃) delivering signals (V$_F$, Modes) defining one of several operating modes (with or without pattern, uniform background or transparent),

B₂)— a computing circuit (54) having a first input (54e₁) connected to the output (42s) of the shaping circuit (42) and receiving the signals x and y, and a second input (54e₂) connected to the first output (53s₁) of the circuit providing parameters (53) and receiving the eight signals that this output delivers, and having a first and second output (54s₁, 54s₂), this computing circuit (54) being capable of:

. computing two coordinates α* and β* from addresses x, y and signals ΔX, ΔY, ΔH, ΔV, off$_x$, and off$_y$ using the following expressions:

$$\alpha* = (x + \text{off}_x) \frac{(y + \text{off}_y)}{\Delta Y} \Delta H \qquad (1)$$

$$\beta* = (y + \text{off}_y) \frac{(x + \text{off}_x)}{\Delta X} \Delta V \qquad (1')$$

. determining whether α* is positive or zero, in which case the circuit computes a relative coordinate α equal to α* modulo ΔX, otherwise the circuit computes α using:

[ΔX−(| α* | modulo ΔX)]modulo ΔX,

where | α* | represents the absolute value of α*,

. determining whether β* is positive or zero in which case the circuit computes a coordinate β equal to β* modulo ΔY, otherwise the circuit computes a relative coordinate β using:

[ΔY−(| β* | modulo ΔY)]modulo ΔY

where | β* | represents the absolute value of β*

. delivering on its first output (54s₁) the coordinates α and β,

. determining whether the coordinate α is less than E and whether, at the same time, the coordinate β is less than L,

. delivering on its second output (54 s₂) a signal (DANS) determining whether the previous condition is or is not satisfied,

B₃)— a patterns memory circuit (55), formed from memories containing data defining different types of pattern and, for each type, several patterns, this circuit including a control input (55e₁) connected to the first output (54s₁) of the computing circuit (54) and receiving the relative coordinates α, β, a second selection input (55e₂) connected to the second output (53s₂) of the circuit providing operating parameters (53), this input (55e₂) receiving signals (CHOICE) selecting one of several patterns, a third input (55e₃) connected to the output (10s₂) of the computer (10) and receiving signals for loading the pattern, and an output (55s) delivering a signal (V$_M$) capable of being written into the image memory for the chosen pattern,

B₄)— a configuration selection circuit (56), this circuit having a first input (56e₁) connected to the third output (53s₃) of the circuit providing operating parameters (53) and receiving siganls (V$_F$, Modes) determining an operational mode, a second input (56e₂) connected to the output (55s) of the pattern memory circuit (55) and receiving the signal (V$_M$), a third input (56e₃) connected to the second output (54s₂) of the computing circuit (54) and receiving the signal (DANS), a fourth input (56e₄), connected to the first output (41s₁) of the memory cycle transmission circuit (41) and receiving the delayed control signal (SC*), this circuit (56) being capable, as a function of the signal (DANS) and of the signal determining the operating mode, of validating the control cycle (SC*) and of determining, as a function of the signal V$_M$, the N-bit word (V) to be written into the image memory, this circuit having a first group of outputs (56s₁) connected to the control input (14C) of the image memory and delivering signals controlling writing into the memory, and a second group of outputs (56s₂) connected to the N validation inputs (14V₁...14V$_N$) of the image memory and delivering the word (V) to be written into the image memory.

2. Graphic terminal according to Claim 1, characterized in that the patterns memory circuit (55) includes at least one of the following three circuits (101, 111, 131):

**0 108 674**

— a spot-pattern memory circuit (101) including a number n of memories ($100_1...100_n$), n being an integer at least equal to 1, each memory having an input connected to the second output ($10s_2$) of the computer (10) and being capable of storing a signal ($Vp_1...Vp_n$) and a multiplexer (102) having n inputs ($102e_1...102e_n$) each connected to one of the n memories ($100_1...100_n$), a control input (102C) and an output (102s) delivering a signal (Vp),

— a skeleton-pattern memory circuit (111), including a memory (110) formed from several memory planes, each plane having a validation input (112), a loading input (113) connected to the second output ($10s_2$) of the computer (10) and an addressing input (114) connected to the output ($54s_1$) of the circuit (54), and a common output (116), a number n' of memories ($120_1...120_n$), n' being an integer at least equal to 1, each containing a particular word ($VS_1...VS_n$), a multiplexer (122) with n' inputs ($122e_1...122e_{n'}$), these inputs each being connected to one of the memories ($120_1...120_{n'}$), to a control input (122C) connected to the output (116) of the meory (110) and to an output (122s) delivering a word ($V_S$) characterizing the selected skeleton-pattern,

— a true-patterns memory circuit (131) including a memory (130) formed from planes each comprising a matrix of memory points, each plane in this memory (13) having a validation input (132), a loading input (133) connected to the second group of outputs ($10s_2$) of the computer (10), an addressing input (134) connected to the output ($54s_1$) of the computing circuit (54) and a single output (136) delivering a signal (Vv) associated with the selected pattern,

the patterns memory circuit also including:

— a logic selection circuit (138) having an input (138e) connected to the second output ($53s_2$) of the circuit providing operating parameters (53) and receiving a signal (CHOICE) determining the choice of a pattern, a first output ($138s_1$) delivering a signal determining a pattern, this output being connected to the control input (102C) of the multiplexer (102) of the spot-pattern memory circuit (101) as well as to the validation input (112) of one of the memory planes of the memory (110) of the skeleton patterns memory circuit (111) and also to the validation input (132) of one of the memory planes of the memory (130) of the true-patterns memory circuit (131), and having a second output ($133s_2$) delivering a signal determining the type of pattern selected (spot-pattern, skeleton-pattern, true-pattern),

— a multiplexer (140) having as many inputs ($140e_1$, $140e_2$, $140e_3$) as there are pattern memory circuits (101, 111, 131), these inputs being connected to the outputs of these pattern memory circuits, a control input (140C) connected to the second output ($138s_2$) of the logic selection circuit (138) and to an output (140s) delivering a selected word ($V_M$) and constituting the output (55s) of the overall pattern memory circuit, this output being connected to the second input ($56e_2$) of the selection circuit (56).

3. Graphic terminal according to Claim 1, characterized in that the computing circuit (54), using twos complement binary arithmetic, directly provides the coordinates α and β, whatever the sign of α* and of β* may be, by applying to the twos complement representation of the values of α* and β* the following equations:

$$\alpha = \alpha^* \text{ Modulo } \Delta X;$$
$$\beta = \beta^* \text{ modulo } \Delta Y,$$

ΔX and ΔY being powers of 2.

26

FIG. 1

0 108 674

FIG. 2

0 108 674

FIG. 3

0 108 674

FIG. 4a

FIG. 4b

4

FIG. 5

$\Delta X=8 \quad \Delta Y=8 \quad \Delta H=0 \quad \Delta V=0$

**FIG. 6**

$\Delta X=32 \quad \Delta Y=8 \quad \Delta H=8 \quad \Delta V=0$

**FIG. 7**

$\Delta X=8 \quad \Delta Y=8 \quad \Delta H=0 \quad \Delta V=2$

**FIG. 8**

FIG. 9

FIG. 10

FIG. 11

FIG. 12

FIG. 13

0 108 674

CYCLE D'ACCES
A LA MEMOIRE — CYCLE SUIVANT

SIGNAUX DE CONTROLE (SC)

SIGNAUX D'ADRESSE (SAd)

$x,y$ DISPONIBLES

$\alpha,\beta$ VALIDES

V VALIDE

$\tau$

(SC*)

SIGNAUX DE CONTROLE RETARDES

(SAd*)

SIGNAUX D'ADRESSE RETARDES

CYCLE RETARDE TRANSMIS
A LA MEMOIRE D'IMAGE

FIG. 14

0 108 674

FIG. 15

```
        7   6   5   4   3   2   1   0
      ┌───┬───┬───┬───┬───┬───┬───┬───┐
MODE  │:::│:::│:::│Mode│Fond│Rg │Ve │Bl │
      └───┴───┴───┴───┴───┴───┴───┴───┘
```

$V_F$

0/1 FOND TRANSPARENT/UNIFORME

0/1 MODE NORMAL/MOTIF

```
         7    6   5   4   3   2   1   0
      ┌────┬────┬───┬───┬───────┬───┬───┐
MAILLE│offy│offx│:::│V/H│   δ   │ΔY │ΔX │
      └────┴────┴───┴───┴───────┴───┴───┘
```

0/1 $\Delta X = 8/32$

0/1 $\Delta Y = 8/32$

$$00 \quad \delta = \frac{\Delta X \text{ ou } \Delta Y}{4}$$

$$01 \quad \delta = \frac{\Delta X \text{ ou } \Delta Y}{2}$$

$$1x \quad \delta = 0$$

| | | |
|---|---|---|
| 0 | $\Delta H = 0$ | $\Delta V = \delta$ |
| 1 | $\Delta H = \delta$ | $\Delta V = 0$ |

0/1 $\text{OFF}_X = 0/4$

0/1 $\text{OFF}_Y = 0/4$

# FIG. 16 a

```
        7  6   5  4  3   2  1  0
      ┌─────────┬─────────┬─────────┐
MOTIF │  TYPE   │ N° MOTIF│ Rg Ve Bl│
      └─────────┴─────────┴─────────┘
```

MOTIF POINT : Vp
MOTIF SQUELETTE : V$_{S1}$

MOTIF SQUELETTE : DE 000 A 111
                        (8 MOTIFS)

MOTIF VRAI : 0 x x / 1 x x
                    (2 MOTIFS)

00 MOTIF POINT
01 MOTIF SQUELETTE
1x MOTIF VRAI

```
        7  6   5  4  3   2  1  0
      ┌─────────┬───────────────────┐
DIME  │░░░░░░░░░│      E-1          │
      └─────────┴───────────────────┘
```

```
        7  6   5  4  3   2  1  0
      ┌─────────┬───────────────────┐
DIML  │░░░░░░░░░│      L-1          │
      └─────────┴───────────────────┘
```

# FIG. 16 b

FIG. 17

FIG. 18

0 108 674

FIG. 19a

FIG. 19b

FIG. 20 a

FIG. 20 b

FIG. 20c

FIG. 20d

FIG. 21

FIG. 22

0 108 674

FIG. 23

FIG. 24

FIG. 25